# EUROPEAN PATENT APPLICATION

(11) **EP 4 592 061 A1**
(43) Date of publication of application: **30.07.2025**
(21) Application number: 24153961.8
(22) Date of filing: 25.01.2024
(51) Int. Cl.: B29C 64/379, B29C 64/118, B29C 64/129, B29C 64/135, B29C 64/153, B29C 64/295, B29C 65/02

(54) **METHODS OF PRODUCING ASSEMBLIES OR COMPONENTS, AS WELL AS ASSEMBLY OR COMPONENT, IN PARTICULAR FOR AN AIRCRAFT OR SPACECRAFT**

(71) Applicant: Airbus Operations GmbH, 21129 Hamburg (DE)
(72) Inventor: Zecheru, Mihai Ioan, 21129 Hamburg (DE)

(57) **Abstract**

The invention relates to a first method of producing an assembly or component (1001-1009, 1011-1017, 1019, 1021-1027, 1029, 1030) including a first part (101-109, 111-117, 119, 219, 121, 322, 123-127, 129, 130) connected to a second part (201-209, 211-217, 319, 419, 221, 122, 223-227, 229, 230). The first method comprises providing the first part and the second part, including 3D-printing the first part or at least a portion thereof in layers. Further, the first method includes arranging the first and second parts relative to each other in a pre-defined configuration, and then introducing heat (H) into a pre-defined, 3D-printed region (101a-106a, 108a, 109a, 111a, 111c, 112a-114a, 115a, 115c, 116a, 117a, 119a, 119c, 219a, 219c, 121a, 123a-127a) of the first part. Moreover, the first method includes deforming the heated pre-defined region of the first part and then allowing the deformed pre-defined region (101b-109b, 111b, 111d, 112b-114b, 115b, 115d, 116b, 117b, 119b, 119d, 219b, 219d, 121b, 322b, 124b-127b) to cool, in order to obtain a positive connection of the first and second parts by engagement of the first part with the second part after having deformed the pre-defined region. Furthermore, the invention relates to second, third, fourth, fifth, sixth, seventh and eighth methods of producing an assembly or component. The invention also relates to an assembly or component (1001-1030) produced or producible using one or more of the methods of the invention, and to an aircraft or spacecraft (1) comprising at least one such assembly or component.

## Description

### TECHNICAL FIELD OF THE INVENTION

The invention relates to methods of producing an assembly or a component, wherein at least one part, or at least a portion thereof, is provided using 3D-printing. Further, the invention relates to assemblies or components, in particular for an aircraft or spacecraft, produced or producible using one or more of the methods of the invention, and to an aircraft or spacecraft comprising such an assembly or such a component.

### TECHNICAL BACKGROUND

Although the invention may be useful in many fields of technology, the invention and the underlying problem will be explained in the following in greater detail and exemplary manner with regard to aircraft or spacecraft production, but without limiting the invention to that effect.

Various methods of 3D-printing, or additive manufacturing, have already been described. Various materials, such as metals or polymers, can today be processed by 3D-printing methods.

In a conventional approach, to obtain a desired component or assembly that is intended to be installed, for instance, in an aircraft or spacecraft, 3D-printed parts are assembled to each other as well as to parts obtained using other production methods by connecting the parts using metallic elements and/or by bonding the parts to each other using an adhesive.

Connecting 3D-printed parts using metallic fasteners may involve considerable workload and associated time and cost. Adhesives are often liquid materials and appropriate care is to be taken during handling and use. Furthermore, assemblies and components involving 3D-printed parts connected using metallic elements or adhesive or both may require considerable effort for recycling at the end of their useful lifetime. Also, metallic elements and adhesives significantly contribute to the weight of the assembly or component, and hence assemblies and components produced in this manner may be less lightweight than desirable. The preceding aspects may make it difficult to increase the number of 3D-printed parts, for example within an aircraft or spacecraft, e.g. to achieve simpler customization or further weight reduction.

It would thus be desirable to be able to connect two or more different parts, at least one of them additively manufactured or 3D-printed, to each other in an improved manner and/or in a structurally advantageous way, which preferably takes into account the materials used, especially 3D-printable materials. Further, it may be preferable to be able to reduce the numbers of individual parts hitherto used in assemblies and components involving 3D-printed parts, as well as to further reduce the weight and cost of such assemblies and components, and further preferably to render the production of such assemblies and components more sustainable.

### SUMMARY OF THE INVENTION

In view of this background, a problem to be solved by the present invention therefore is to provide improved methods for connecting two or more different parts, at least one of which is/are made by 3D-printing, to each other. Further, correspondingly improved assemblies or components are to be provided.

This problem is solved by a method having the features of claim 1 and/or by a method having the features of claim 2 and/or by a method having the features of claim 3 and/or by a method having the features of claim 4 and/or by a method having the features of claim 6 and/or by a method having the features of claim 7 and/or by a method having the features of claim 10 and/or by a method having the features of claim 13 and/or by an assembly or component having the features of claim 17 and/or by an aircraft or spacecraft comprising such an assembly or component.

Accordingly, the invention proposes a first method of producing an assembly or component including a first part connected to a second part. The first method comprises:
- providing the first part and the second part, including 3D-printing the first part or at least a portion thereof in layers;
- arranging the first and second parts relative to each other in a pre-defined configuration, and then introducing heat into a pre-defined region of the first part, the pre-defined region being a 3D-printed region of the first part;
- deforming the heated pre-defined region of the first part and then allowing the deformed pre-defined region to cool, in order to obtain a positive connection of the first and second parts by engagement of the first part with the second part after having deformed the pre-defined region.

Further, the invention proposes a second method of producing an assembly or component including a first part connected to a second part. The second method comprises:
- providing the first part and the second part, including 3D-printing the first part or at least a portion thereof in layers;
- introducing heat into a pre-defined region of the first part, the pre-defined region being a 3D-printed region of the first part, and then arranging the first and second parts relative to each other in a pre-defined configuration;
- deforming the heated pre-defined region of the first part and then allowing the deformed pre-defined region to cool, in order to obtain a positive connection of the first and second parts by engagement of the first part with the second part after having deformed the pre-defined region.

Further, the invention proposes a third method of producing an assembly or component including a first part and a second part. The third method comprises:
- providing an intermediate workpiece including the first part that is integrally formed with the second part by 3D-printing the intermediate workpiece or at least a portion thereof in layers;
- introducing heat into a pre-defined first region of the intermediate workpiece;
- deforming the intermediate workpiece including deforming the pre-defined first region, in order to arrange the first and second parts relative to each other in a pre-defined configuration;
- introducing heat into a pre-defined second region being a 3D-printed region of the first or second part;
- deforming the heated pre-defined second region and then allowing the deformed pre-defined second region to cool, in order to obtain a positive connection of the first and second parts by engagement of the first and second parts after having deformed the pre-defined second region.

Further, the invention proposes a fourth method of producing an assembly or component including a first part and a second part. The fourth method comprises:
- providing an intermediate workpiece including the first part that is integrally formed with the second part by 3D-printing the intermediate workpiece or at least a portion thereof in layers;
- introducing heat into a pre-defined first region of the intermediate workpiece and introducing heat into a pre-defined second region being a 3D-printed region of the first or second part;
- deforming the intermediate workpiece including deforming the pre-defined first region, in order to arrange the first and second parts relative to each other in a pre-defined configuration, and deforming the heated pre-defined second region and then allowing the deformed pre-defined second region to cool, in order to obtain a positive connection of the first and second parts by engagement of the first and second parts after having deformed the pre-defined second region.

Further, the invention proposes a fifth method of producing an assembly or component including a first part connecting a second part and a third part. The fifth method comprises:
- providing the first part, the second part and the third part, including 3D-printing the first part or at least a portion thereof in layers;
- arranging the first, second and third parts relative to each other in a pre-defined configuration, and then introducing heat into at least one pre-defined region of the first part, the pre-defined region being a 3D-printed region of the first part;
- deforming the heated pre-defined region of the first part and then allowing the deformed pre-defined region to cool, in order to obtain a positive connection of the first part with each of the second and third parts by engagement of the deformed pre-defined region with one of the second and third parts and by additional engagement of a further pre-defined region of the first part with the other one of the second and third parts.

Further, the invention proposes a sixth method of producing an assembly or component including at least a first part and a second part which, in cooperation, connect a third part and a fourth part. The sixth method comprises:
- providing the first, second, third and fourth parts, including 3D-printing at least, in layers, the first part or at least a portion thereof and the second part or at least a portion thereof;
- arranging the first, second, third and fourth parts relative to each other in a pre-defined configuration, and then introducing heat into a pre-defined region of the first part or into pre-defined regions of each of the first and second parts, the pre-defined region or regions being a 3D-printed region or regions;
- deforming the heated pre-defined region of the first part or the heated pre-defined regions of the first and second parts and then allowing the deformed pre-defined region or regions to cool, in order to positively connect the third and fourth parts by engagement of at least one of the first and second parts with the third part and by engagement of at least the other one of the first and second parts with the fourth part.

The invention further proposes a seventh method of producing an assembly or component including a first part connected to a second part. The seventh method comprises:
- providing the first part and the second part, including 3D-printing at least, in layers, the first part or at least a portion thereof and the second part or at least a portion thereof;
- arranging the first and second parts relative to each other in a pre-defined configuration, and then introducing heat into pre-defined regions of each of the first and second parts, the pre-defined regions being 3D-printed regions of the first and second parts;
- deforming the heated pre-defined regions of the first and second parts and pressing the deformed pre-defined regions against each other in order to unite material of the pre-defined regions in a contact area thereof, and then allowing the pre-defined regions to cool.

Further, the invention provides an eighth method of producing an assembly or component including a first part connected to a second part, the method comprising:
- providing the first part and the second part, including 3D-printing, in layers, the first part or at least a portion thereof and the second part or at least a portion thereof, the first part and the second part being adapted to be connected in such a manner that a first face of the first part faces a second face of the second part, the first and second parts being shaped to enable a primary positive connection connecting the first and second parts and further being shaped, in corresponding areas of the first and second faces, to enable at least one secondary positive connection of the first and second parts in the vicinity of the primary positive connection;
- arranging the first and second parts relative to each other in such a manner that the first face faces the second face, and thereby establishing the secondary positive connection; and
- securing the first and second parts to each other at the primary positive connection.

It is an idea of the invention to produce assemblies or components, e.g. for an aircraft or spacecraft, in a more cost-effective, time-saving and at the same time sustainable and environmentally friendly manner by avoiding the use of metallic fastening elements for attaching 3D-printed parts to each other and also by avoiding the use of glue or liquid adhesive. In this way, the recyclability of the assemblies and components proposed by the invention can also be improved. As using metallic fasteners or adhesives may conventionally often contribute to an increase in weight, the invention further makes it possible to provide even more lightweight assemblies and components.

The invention thus provides advanced fastening techniques for additive manufacturing, which are capable of contributing also to increasing the fraction of parts that may be 3D-printed, e.g. for use in an aircraft or spacecraft. The production of complex assemblies and components with a high degree of structural integration is facilitated. In this manner, an increased number of parts may be easily customized and designed to be particularly weight-saving.

Accordingly, the present invention provides advantages of weight reduction, reduction of assembly steps and associated workload, enables adhesive-free connections in an environmentally friendly manner, also contributes to improved recyclability, facilitates sustainable production of assemblies and components, facilitates retrofit and repair, in particular also in challenging environments such as e.g. in space, and facilitates the design of components and assemblies to make them suitable for 3D-printing.

Moreover, the invention proposes an assembly or component, in particular for an aircraft or spacecraft, the assembly or component being produced or producible using one or more of the first to eighth methods of the invention.

The invention furthermore provides an aircraft or spacecraft comprising at least one such assembly or component.

Advantageous improvements and developments of the invention are contained in the dependent claims as well as in the description referring to the drawings.

In particular, any one of the first part and/or second part and/or third part and/or fourth part may be obtained by 3D-printing.

In some embodiments, the pre-defined region of the first part may substantially encompass the entire first part. Moreover, in further embodiments, the pre-defined region of the second part may substantially encompass the entire second part.

In a development of the first to fourth methods, the step of arranging the first and second parts in the pre-defined configuration includes introducing a section of the first part into or through a passage or into a recess in the second part.

In a development of the sixth method, each of the third and fourth parts comprises a passage and the step of arranging the first, second, third and fourth parts in the pre-defined configuration includes arranging the third and fourth parts adjacent to each other and in such a manner that sections of each of the third and fourth parts that include the passage are arranged between the first and second parts.

In a development of the invention, the first part may be a hollow body or hollow section or the first part may be a solid body or solid section or the first part may be provided by assembling at least two individual pieces or the first and second parts may be plate-type parts or shell-type parts or tube-type parts.

In a development of the first to seventh method, the step of deforming the pre-defined region or regions comprises modifying a shape of a main surface of extension of the layers, and in particular comprises modifying a line of extension of filaments deposited during 3D-printing and forming the layers. Thereby, a strong and robust connection can be obtained, which in particular advantageously uses the increased strength of the 3D-printed material along the filament direction.

Furthermore, in a development of the first to seventh method, the method includes masking at least one of the parts before introducing heat. In particular, a masking material, for example a metal foil, may be applied to a surface of the at least one of the parts for masking. In this way, the introduction of heat from an external source, e.g. a hot-air gun or an infrared radiator, can be effectively limited to the pre-defined region.

In a development of the eighth method, the first and/or second part is formed with at least one through-opening for enabling the primary positive connection, the first part is provided in the first face with at least one recess having a rounded cross-sectional shape in the vicinity of the primary positive connection, and in that the second part is provided on the second face with at least one protrusion having a rounded cross-sectional shape in the vicinity of the primary positive connection and configured to be received in the recess in the first face. In this development, the method includes arranging the first and second parts in such a way that the protrusion engages with the recess.

In a development of the invention, the 3D-printing includes a step or steps of additive manufacturing using a process of fused deposition modeling or fused filament fabrication or selective laser sintering or stereolithography. Selective laser sintering may be performed using a powder bed, in particular formed with small polymer particles, beads or spheres, e.g. made from a thermoplastic.

In particular, the 3D-printing may include deposition of a material filament in layers, e.g. deposition of a thermoplastic filament.

In accordance with a further development of the invention, the 3D-printing comprises processing a thermoplastic synthetic material and/or the 3D-printing includes a step or steps of depositing a thermoplastic synthetic material layer by layer, in particular by depositing a thermoplastic filament.

In a further development, the thermoplastic synthetic material may be a high-performance thermoplastic, for instance a polyether imide. However, using other thermoplastic materials is conceivable.

For example, 3D-printing objects from a polymer material, e.g. a thermoplastic polymer, as a starting material may result in a lightweight object at limited cost. Moreover, 3D-printing methods based on layerwise deposition of thermoplastic filaments may, for example, be performed in many environments and situations, also in a low-gravity environment such as in space or on other planets, e.g. on Moon or Mars. 3D printing processes such as those designated as fused deposition modeling or fused filament fabrication may help to reduce production cost and usage of material and energy.

In a preferred development of the invention, by introducing heat into the pre-defined region or regions, a temperature of a material in that region or regions is increased to an elevated temperature that is below a glass transition temperature of the material, for instance below a glass transition temperature of a thermoplastic synthetic material from which the region or regions is/are formed using 3D-printing. For example, the temperature of the material in the region or regions is increased to an elevated temperature within a range from approximately 150 degrees Celsius to approximately 190 degrees Celsius.

In a development of the invention, the heat may be introduced using hot air or using infrared radiation. The infrared radiation may be electrically generated or may be generated by a flame, for example.

The improvements, enhancements and developments of the present invention may be arbitrarily combined with each other whenever this makes sense. Moreover, other possible enhancements, developments and implementations of the present invention comprise combinations of features of the invention which have been described above or will be described in the following in relation to the detailed description of embodiments, even where such a combination has not been expressly mentioned.

### BRIEF SUMMARY OF THE DRAWINGS

The present invention is explained in more detail below with reference to the embodiments shown in the schematic figures, wherein:
- Figs. 1A-1D: show steps of a method of producing an assembly or component in accordance with a first embodiment, in perspective views;
- Figs. 2A-2D: show steps of the method of the first embodiment in sectional views;
- Figs. 3A-3B: illustrate steps of a method of producing an assembly or component in accordance with a second embodiment, in sectional views;
- Figs. 4A-4B: illustrate steps of a method of producing an assembly or component in accordance with a third embodiment, in sectional views;
- Figs. 5A-5B: illustrate steps of a method of producing an assembly or component in accordance with a fourth embodiment, in sectional views;
- Figs. 6A-6B: illustrate steps of a method of producing an assembly or component in accordance with a fifth embodiment, in sectional views;
- Figs. 7A-7B: illustrate steps of a method of producing an assembly or component in accordance with a sixth embodiment, in sectional views;
- Figs. 8A-8C: illustrate a part used in a method of producing an assembly or component in accordance with a seventh embodiment, in plan, sectional and perspective views;
- Fig. 8D: illustrates an assembly in accordance with the seventh embodiment in a sectional view;
- Figs. 9A-9C: illustrate a part used in a method of producing an assembly in accordance with a eighth embodiment, in plan, sectional and perspective views;
- Figs. 10A-10C: show a step of the method of the eighth embodiment, in plan, sectional and perspective views;
- Fig. 10D-10G: show a completed assembly obtained by performing the method of the eighth embodiment, in plan, sectional and perspective views;
- Figs. 11A-11D: illustrate steps of a method of producing an assembly in accordance with a ninth embodiment, in sectional views;
- Figs. 12A-12B: illustrate steps of a method of producing an assembly in accordance with a tenth embodiment, in sectional views;
- Figs. 12C-12D: illustrate the steps shown in Figs. 12A-12B in perspective views;
- Figs. 13A-13B: illustrate steps of a method of producing an assembly in accordance with an eleventh embodiment, in sectional views;
- Figs. 14A-14D: show steps of the method of the eleventh embodiment in perspective views;
- Figs. 15A-15C: illustrate steps of a method of producing an assembly in accordance with a twelfth embodiment, in sectional views;
- Figs. 16A-16H: illustrate steps of a method of producing an assembly in accordance with a thirteenth embodiment, in perspective and sectional views;
- Figs. 17A-17C: illustrate steps of a method of producing an assembly in accordance with a fourteenth embodiment, in sectional views;
- Figs. 18A-18D: illustrate steps of a method of producing an assembly in accordance with a fifteenth embodiment, in sectional views;
- Fig. 19: shows a part formed with two pieces, each of the pieces being made using 3D-printing, for use in a method for producing an assembly in accordance with a sixteenth embodiment, in perspective view;
- Figs. 20A-20C: illustrate steps of the method of producing an assembly in accordance with the sixteenth embodiment, in sectional views;
- Fig. 21: shows a part formed with two pieces each made using 3D-printing, the pieces not being shown individually, for use in a method for producing an assembly in accordance with a seventeenth embodiment, in perspective view;
- Figs. 22A-22C: illustrate a completed assembly including two plate-type parts connected in the manner of a lap joint using the part of Fig. 21, wherein the assembly has been produced using the method of the seventeenth embodiment, in perspective, sectional and plan views;
- Figs. 23A-23D: illustrate steps of a method of producing an assembly in accordance with an eighteenth embodiment, in sectional views;
- Figs. 24A-24D: illustrate a first sequence of steps of a method of producing an assembly in accordance with a nineteenth embodiment, in sectional views;
- Figs. 24E-24F: show an intermediate assembly obtained by performing the sequence of steps of Figs. 24A-24D, in a sectional view and a detailed sectional view;
- Figs. 25A-25C: illustrate a second sequence of steps of the method of producing an assembly in accordance with the nineteenth embodiment, in sectional views;
- Figs. 25D-25E: show the completed assembly obtained by performing the method of the nineteenth embodiment, in a sectional and a perspective sectional view;
- Figs. 26A-26F: illustrate steps of a method of producing an assembly in accordance with a twentieth embodiment, in sectional and perspective views;
- Figs. 27A-27F: illustrate steps of a method of producing an assembly in accordance with a twenty-first embodiment, in sectional and perspective views
- Figs. 28A-28F: illustrate some steps of a method of producing an assembly in accordance with a twenty-second embodiment, as well as parts used in the method, in perspective and sectional views;
- Fig. 29: shows, in an exploded perspective view, an assembly obtained by performing a method of a variant of the twenty-second embodiment;
- Fig. 30: shows, as a result of a finite-element simulation, the shear flow in an assembly produced in line with the thirteenth embodiment of Figs. 16A-16H;
- Fig. 31: shows, as a result of a finite-element simulation, the shear flow in an assembly produced in line with the twenty-second embodiment of Fig. 29;
- Figs. 32A-32C: illustrate some steps of a method of producing an assembly in accordance with a twenty-third embodiment, in perspective and sectional views;
- Figs. 33A-33C: illustrate a step of a method of producing an assembly in accordance with a twenty-fourth embodiment, in sectional and perspective views;
- Figs. 34A-34B: illustrate a further step of the method of the twenty-fourth embodiment, in sectional and perspective views;
- Figs. 35A-35B: illustrate a still further step of the method of the twenty-fourth embodiment, in sectional and perspective views;
- Figs. 36A-36D: illustrate steps of producing an assembly in accordance with a twenty-fifth embodiment, in sectional and side views;
- Figs. 37A-37B: illustrate steps of a method of producing an assembly in accordance with a twenty-sixth embodiment, in sectional views;
- Figs. 38A-38B: show the steps of Figs. 37A-37B in perspective view;
- Fig. 38C: shows the completed assembly obtained by performing the method of the twenty-sixth embodiment, in perspective partial view;
- Fig. 39: shows, in perspective view, a component obtained by performing a method in accordance with a twenty-seventh embodiment;
- Figs. 40A-40C: illustrate steps of the method of producing an assembly of the twenty-seventh embodiment, in perspective views;
- Figs. 41A-41D: illustrate some steps of a method of producing an assembly in accordance with a twenty-eighth embodiment as well as an assembly obtained thereby, in perspective views;
- Figs. 42A-42C: show an assembly according to a twenty-ninth embodiment, in perspective, side and sectional views;
- Figs. 43A-43D: show an assembly according to a thirtieth embodiment, in perspective, plan, side and sectional views; and
- Fig. 44: shows an exemplary aircraft in which one or more of the assemblies of the first to twenty-ninth embodiments may be used, according to embodiments of the invention.

In the figures of the drawings, elements, features and components which are identical, functionally identical and of identical action are denoted in each case by the same reference designations unless stated otherwise. Elements of the drawings are not necessarily drawn to scale.

### DESCRIPTION OF EXEMPLARY EMBODIMENTS

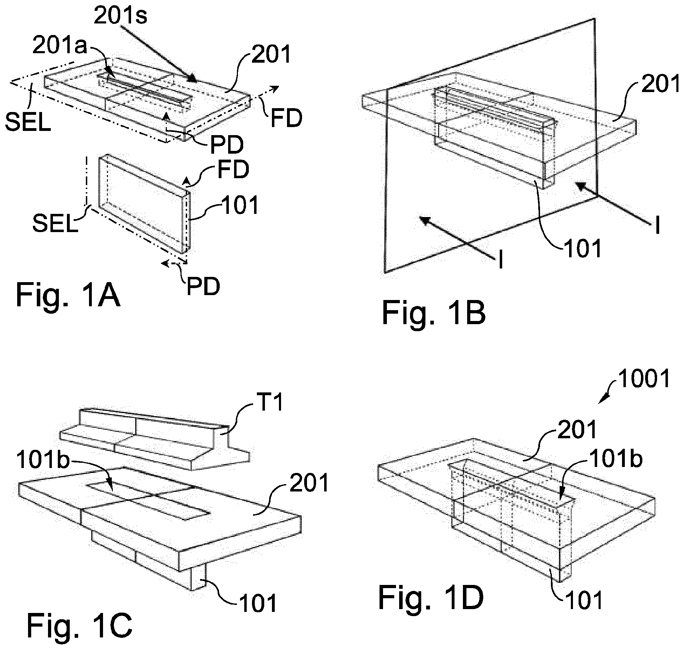

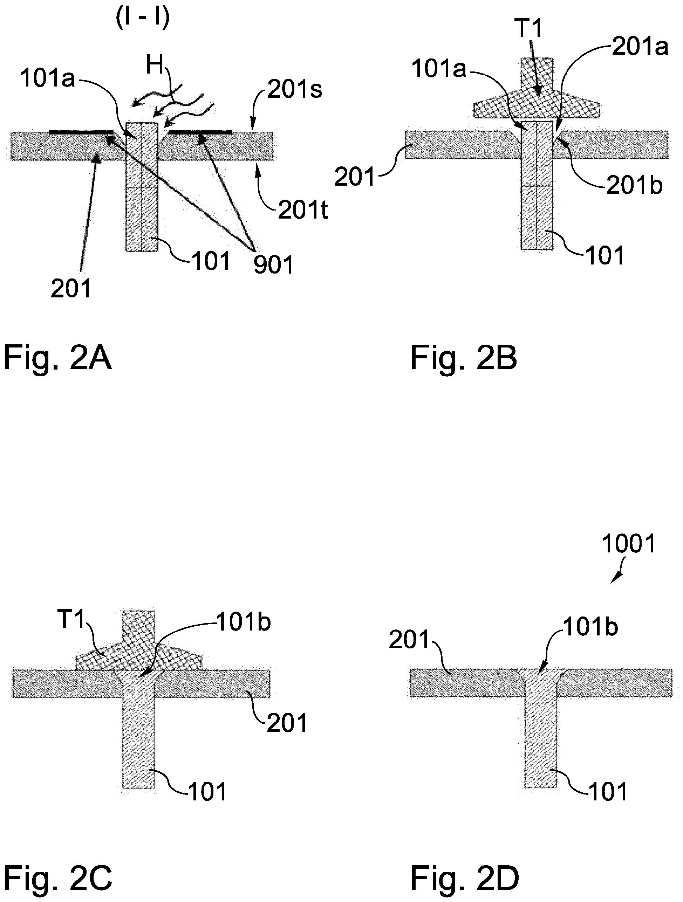

Fig. 1A-D, 2A-D illustrate production of an assembly or complex component 1001 according to a first embodiment, wherein the assembly or component 1001 includes a first part 101 and a second part 201 that are connected to each other.

In the first embodiment, the first part 101 and second part 201 are each provided by 3D-printing the parts 101, 201 using deposition of a thermoplastic filament, e.g. a filament from a polyether imide (PEI). The parts 101, 201 may be separate 3D-printed elements, illustrated in Figs. 1A-D, 2A-D, or may instead be integrally formed as sections of a larger 3D-printed object. Fig. 1A illustrates preferable printing directions PD for the first and second parts 101, 201, a principal direction FD along which the filaments are deposited, and a main surface of extension SEL of the printed layers. The mechanical strength of the parts 101, 201 thus exhibits anisotropy and is considerable along the filament direction FD, but may be less transverse to the surface SEL.

The second part 201 is formed as a plate having a passage 201a configured as an elongate slot, having a chamfer 201b towards a first surface 201s of the second part 201. The first part 101 is formed as a solid, flange-type element. For a second surface 201t of the second part 201, the first part 101 is partially inserted into and through the passage 201a, the cross-sectional shape of which substantially corresponds to the inserted portion of the first part 101.

After arranging the first and second parts 101, 201 relative to each other in a pre-defined configuration, see Figs. 1B and 2A, with the first part 101 protruding from the first surface 201s, heat H is applied to a pre-defined section 101a, being a flange end and accessible for heating from the side of the surface 201s, e.g. by a hot-air gun or infrared radiation. The pre-defined section 101a is a 3D-printed section. Using the applied heat H, the pre-defined section 101a is heated to an increased temperature that is still below the glass-transition temperature of the thermoplastic material of the first part 101, e. g. the PEI. In this way, the pre-defined section 101a softens in a controlled manner. In order to avoid softening the neighboring regions of the second part 201, the second part 201 is masked by applying a masking material 901, such as a metallic tape or metal foil, onto portions of the surface 201s. The masking material 901 increases heat dissipation. The masking material 901 may be an aluminum tape.

The pre-defined section 101a, which has been softened in this manner by the application of heat H, is then deformed using a die-type tool T1. Thereby, the shape of the pre-defined section 101a is transformed and the section 101a is formed into the chamfered shape of the slot 201a. After the deformed pre-defined section 101b has cooled down, the parts 101 and 201 are positively connected by engagement, in other words, the flange 101 is fixed to the plate 201.

The pre-defined region 101a is a 3D-printed region of the first part 101. During the connection process, the filament direction FD and surface of extension SEL is deformed, in Figs. 2B-C in a lateral direction. Forces acting in a manner attempting to pull out the first part 101 from the second part 201, downwards in Fig. 2D, thus can be supported in an advantageous, robust manner along the filament direction FD.

In a variant, the parts 101 and 201 of the first embodiment may also be 3D-printed using selective laser sintering (SLS) or stereolithography (SLA).

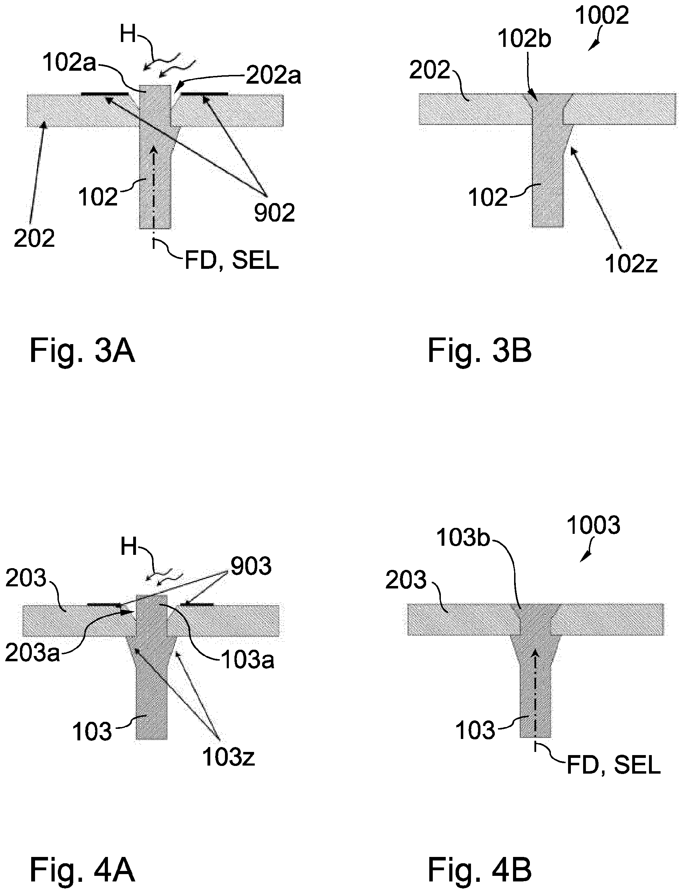

Figs. 3A-B illustrate a second embodiment. An assembly or component 1002 is obtained in the same manner as in the first embodiment by connecting a first part 102 and a second part 202 having a chamfered passage 202a. A pre-defined region 102a is heated, while nearby regions of the second part 202 are protected by masking material 902. The deformed region 102b engages with the second part 202, connecting parts 102, 202. The second embodiment differs from the first embodiment in that the first part 102 comprises a stopper 102z, which is formed as a lateral protrusion, provides defined abutment for the first part 102 during introduction into the passage 202a, and further fixes the parts 102, 202 relative to each other by counteracting relative movement of the parts 102, 202 in a second direction. Thus, the assembly or component 1002 is stabilized, in particular if the assembly or component 1002 should carry high load and/or the plate-type part 202 is not further supported.

Figs. 4A-B illustrate production of an assembly or component 1003 according to a third embodiment from a first part 103 and a second parts 203 having a chamfered passage 203a. The first part 103 comprises stoppers 103z formed laterally on both sides thereof. When the stoppers 103z abut on a surface of the second part 203, a pre-defined region 103a of the first part 103 has been introduced into the passage 203a and protrudes therefrom. As in the first embodiment, masking material 903 is applied to the second part 203, the region 103a is heated and deformed and the deformed region 103b engages with the second part 203 on the chamfered side of the slot-type passage 203a. The third embodiment may be useful in particular in situations involving considerable loads acting on the parts 103, 203.

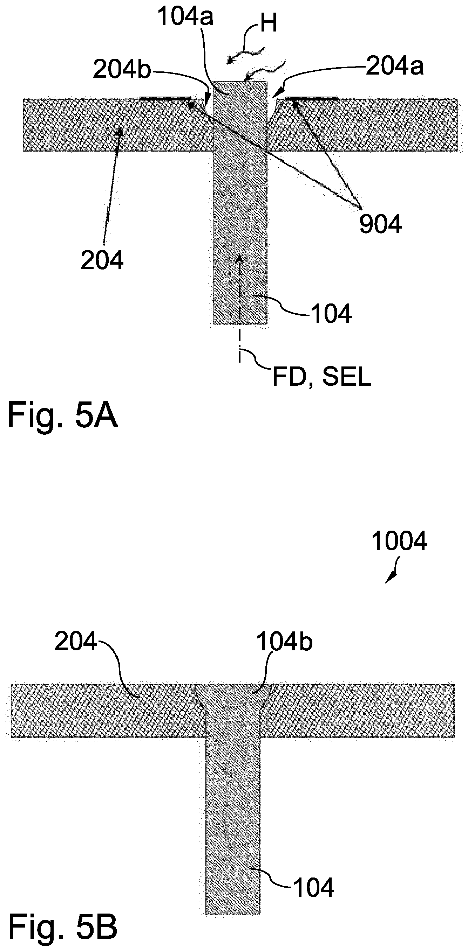

Figs. 5A-B illustrate a fourth embodiment. Production of an assembly or component 1004 is performed in the same manner as in the first embodiment from first and second parts 104, 204. The fourth embodiment differs from the first embodiment in that a slot-shaped passage 204a is not chamfered where it opens to one side, but is laterally recessed towards that side in a rounded manner, in other words with a rounded profile in cross-section. Masking material 904 is applied, a pre-defined region 104a of the first part 104 is deformed e.g. using a die as in the first embodiment, and the deformed pre-defined region 104b engages with the second part 204 where the passage 204a widens with the rounded shape 204b.

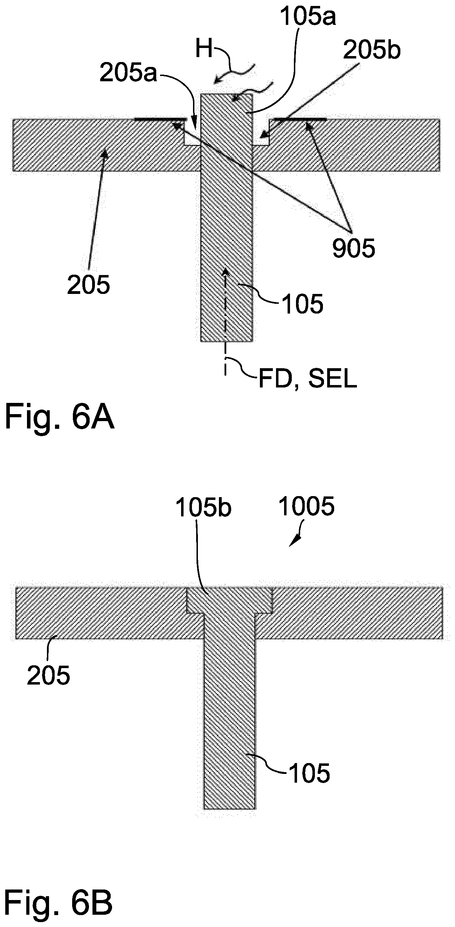

Figs. 6A-B illustrate a fifth embodiment of producing an assembly or component 1005 by connecting a first and second part 105, 205. As in the first to fourth embodiments, both parts 105 and 205 are initially made by 3D-printing, in particular by depositing thermoplastic filaments. The second part 205 has a slot-type passage 205a. The fifth embodiment differs from the first one in that the passage 205a widens, where it opens on one side of the second part 205, in a step-wise manner, similar to a counterbored through-hole. After partially introducing the first part 105 into and through the recessed slot 205a, a pre-defined region 105a of the first part 105 is exposed to heat H, while neighboring regions of the second part 205 are protected by masking material 905. The softened region 105a is then deformed, e.g. using a die as in the first embodiment, and the deformed region 105b fills the flat, step-type, recessed shape 205b. The fifth embodiment may provide an assembly or component 1005 with additional stability.

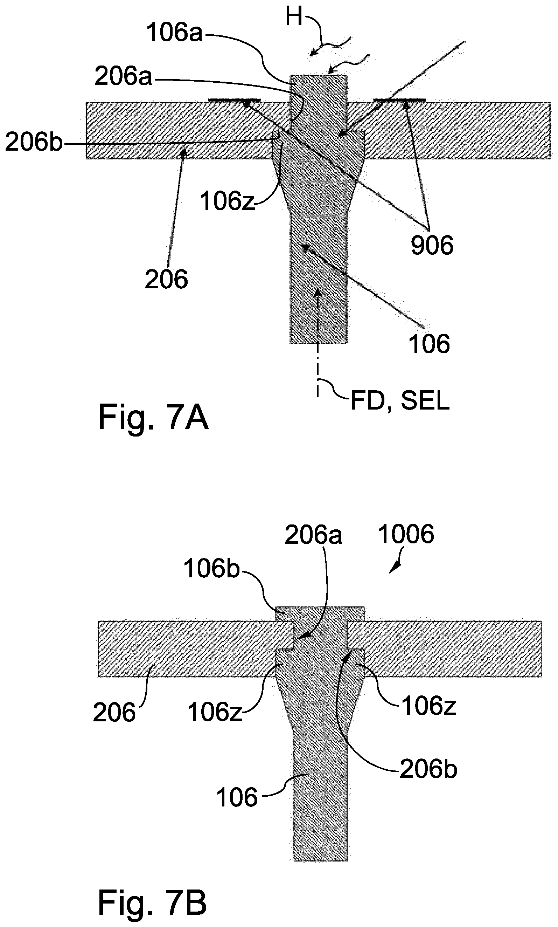

Figs. 7A-B illustrate a sixth embodiment of producing an assembly or component 1006 by connecting 3D-printed first and second parts 106, 206. The assembly or component 1006 of the sixth embodiment may be particularly suitable for situations in which the assembly or component 1006 has to support heavy loads and where high structural stability is required. The sixth embodiment differs from the fifth embodiment in a cross-sectional shape of the first part 106, which includes stoppers 106z that outwardly protrude on opposite sides on the first part 106. An external shape of the stoppers 106z corresponds to a recessed shape 206b, where a slot-shaped passage 206a in the second part 206 widens in a step-like manner similar to a counterbored hole. When the first part 106 is partially inserted into and through the recessed slot 206a, the stoppers 106z abut on the second part 206 and fittingly fill the recessed shape 206b. Masking material 906 is applied to the second part 206, a pre-defined region 106a of the first part 106, protruding from the second part 206, is exposed to heat H, the pre-defined region 106b is deformed, and the deformed pre-defined region 106b engages a flat, outer surface of the second part 206. In order to avoid trapping the masking material 906 between the deformed region 106b and the outer surface of the second part 206, the masking material 906 has been arranged on that outer surface at a distance from a neighboring edge of the passage 206a. Also, by arranging the masking material 906 in this manner, surface regions of the second part 206 close to the region 106a may be heated and softened as well, at least to some extent, whereby the connection of the deformed region 106b with that surface of the second part 206 may be further enhanced.

The slot-shaped passages 101a-106a of the first to sixth embodiments may terminate, on their narrow sides, by a straight wall, which essentially forms a right angle with the longer sides of the passage 101a-106a. This is illustrated in exemplary manner in Fig. 1C.

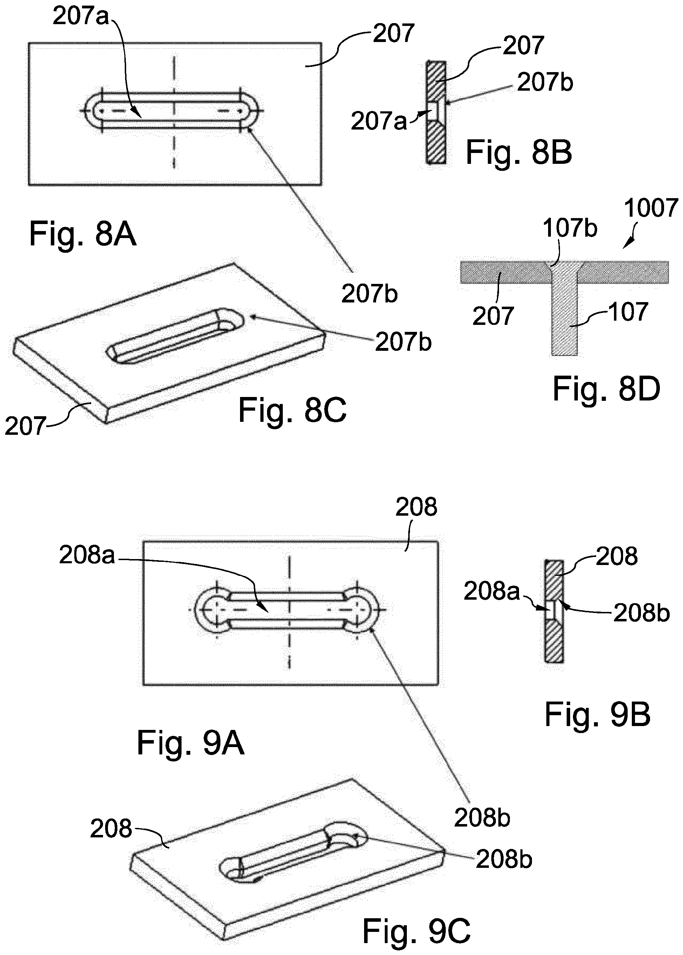

Figs. 8A-D illustrates a seventh embodiment. An assembly or component 1007 is produced from first and second parts 107, 207. Figs. 8A, 8C show that a slot-type passage 207a in the second part 207 may terminate, on its narrow sides, in a rounded manner. The rounded ends of the elongate slot 207a are formed, in plan view, each with a contour follow a circular arc having a radius that corresponds to half of the transverse width of the slot 207a. The rounded ends help to avoid stress concentrations by removing sharp corners and edges at the narrow ends of the slot 207a. A chamfer 207b follows the entire elongate contour of the slot-like passage 207a, including the rounded narrow ends thereof. In the seventh embodiment, first and second parts 107, 207 are connected in the same manner as in the first embodiment, described in detail above, using engagement of the deformed region 107b. Further, any of the second to sixth embodiments could be modified to included rounded ends of a slot-type passage 202a-206a, in a manner analogous to the embodiment of Figs. 8A-D.

Of course, in further variants of the first to seventh embodiments, the passage 201a-207a may be configured with another shape, which is not necessarily straight and/or is not necessarily elongate. For example, round passages 201a-207a are conceivable. However, by 3D-printing the first parts 101-107 and the second parts 201-207, elongate or even curved passages 201a-207a may be obtained and may be configured in a targeted manner to suit the particular application.

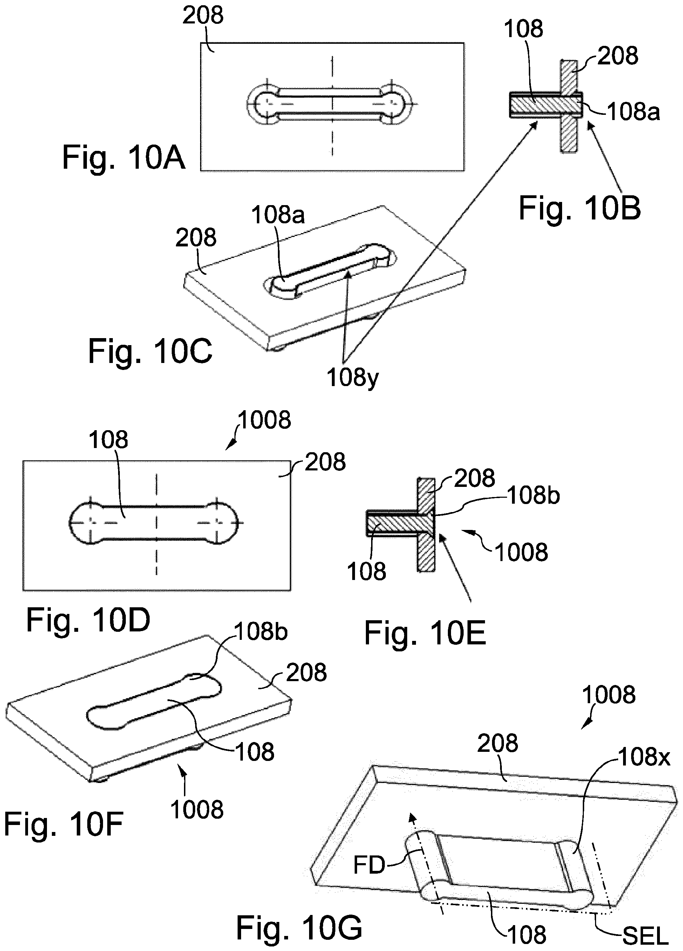

An eighth embodiment is illustrated in Figs. 9A-C and 10A-G. An assembly or component 1008 is produced by connecting first and second parts 108, 208. Similar to the seventh embodiment, the second part 208 comprises a passage 208a that has a rounded shape at each of its narrow ends. Different from the second part 207 of the seventh embodiment, the contour of the passage 208a is terminated at the narrow ends by a circular arc in each case, which has a radius that exceeds a transverse width of the slot-shaped passage 208a in a middle region thereof. An outer contour 108y of the first part 108 substantially corresponds to the inner contour of the passage 208a and accordingly is shaped in the manner of a plate-type section that is terminated by cylinder-shaped bulges 108x. A chamfer 208b follows the entire contour of the passage 208a. In the same manner as in the first embodiment, a pre-defined region 108a is heated and deformed. The deformed pre-defined region 108b engages with the chamfer 208b. In this manner, the first and second parts 108, 208 are positively connected to each other. The eighth embodiment may in particular be suitable for higher loads and can secure a further improved fastening of the parts 108, 208 to each other. A better load distribution may be obtained in the region of the rounded ends of the slot 208a and stress concentrations can be reduced.

Of course, a passage in the manner of a slot with rounded ends having an increased radius, as shown in exemplary manner in Figs. 9A-C, 10A-G for the eighth embodiment, may be used in variants of any one of the second to sixth embodiments described above. For example, the shape of the passage 208a may be combined with the stoppers 102z or 103z, with the rounded hollow shape 204b that may be provided along an edge of the passage 208a, with the recessed shape 205b that surrounds the passage along an edge thereof similar to a counterbored hole, or with the combination of the recessed shape 206b and the stoppers 106z.

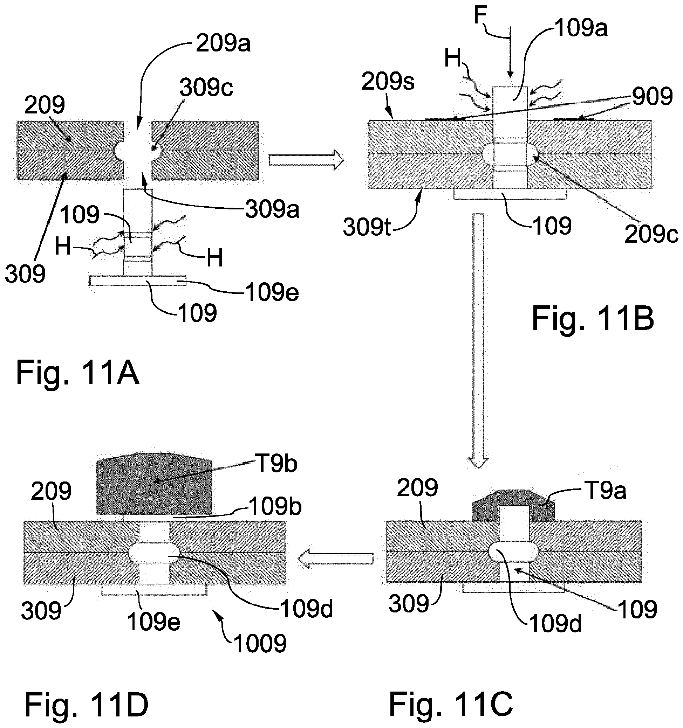

Figs. 11A-D illustrate a method of producing an assembly or component 1009 including a first part 109 that connects a second part 209 and a third part 309, in accordance with a ninth embodiment.

In a first step, the first part 109 is provided by 3D-printing the part 109 in a layered manner, for example using a process of selective laser sintering (SLS) or stereolithography (SLA). Alternatively, the first part 109 may be produced by a process of depositing filaments. The second part 209 and the third part 309 are also preferably provided in the form of 3D-printed parts. The first part 109 includes a longitudinally extending portion that may be pin- or plate-shaped, and a flange-shaped pre-defined region 109e connected to an end side of the longitudinally extending portion. Preferably, the parts 109, 209, 309 are each formed from a thermoplastic synthetic material, such as e.g. a polyether imide (PEI).

In a next step, heat H is introduced into a pre-defined region 109c of the first part 109, which is a pre-defined 3D-printed region located at an intermediate position along the longitudinally extending portion. By introducing heat H in this step, the region 109c is heated to an increased temperature that is below the glass-transition temperature of the thermoplastic from which the part 109 is made. A masking material might in some cases be used in this step, but also may not be necessary and therefore is not illustrated in Fig. 11A.

The second and third parts 209, 309 are, in the exemplary ninth embodiment, plate-shaped parts each having a passage 209a, 309a. In Figs. 11A-D, the parts 209, 309 are arranged adjacent to each other in such a way that the passages 209, 309 are located at corresponding positions and match. Where the parts 209, 309 contact each other at main surfaces thereof, in the vicinity of the through-opening formed by the matching passages 209, 309, each of the parts 209, 309 is formed with a recess 209c, 309c respectively. The recesses 209c, 309c in cooperation form a cavity that has a rounded cross-sectional shape and is arranged symmetric with respect to the contact surface of the parts 109, 209.

After heating the pre-defined region 109c, the first part 109 is partially introduced into and through the through-opening formed by the cooperating passages 209, 309, in such a manner that the flange-shaped pre-defined region 109e abuts on an outer surface of the third part 309 and a pre-defined end region 109a of the first part 109, which is an end region of the longitudinal, plate- or pin-type portion thereof, protrudes from an opposite outer surface of the second part 209. The pre-defined, heated region 109c is then deformed by applying a force F on an end face of the first part 109 which protrudes from the second part 109, as illustrated in Fig. 11B. The force F may be applied using a die-type first tool T9a, see Fig. 11C. Thereby, the pre-defined region 109c, softened by the introduced heat H, is pressed into the recesses 209c, 309c and as deformed pre-defined region 109d fills the internal, rounded cavity formed by the recesses 209c, 309c in cooperation.

In a next step, the protruding pre-defined region 109a is heated to an increased temperature below the glass-transition temperature of the thermoplastic from which the first part 109 has been produced by 3D-printing, by introducing heat H, e.g. using a hot-air gun or infrared radiator. In order to protect the second part 209 against the heat H, the second part 209 is masked using a masking material 909, e.g. an aluminum tape. The masking material 909 is arranged at a distance from the entrance of the passage 209a, in order to avoid trapping the material 909 between the part 209 and the pre-defined region 109a after deforming the latter.

The heated pre-defined region 109a is then deformed using a die-type second tool T9b, to form a deformed pre-defined region 109b, as shown in Fig. 11D.

When both deformed pre-defined regions 109d and 109b have cooled, the parts 109, 209 and 309 are firmly positively connected. The first part 109 may also be designated as a 3D-printed fastener, e.g. obtained by SLS or SLA, that connects the parts 209 and 309. A cross-sectional shape of the passages 209, 309 may be round or may be elongated, i.e. of slot-type.

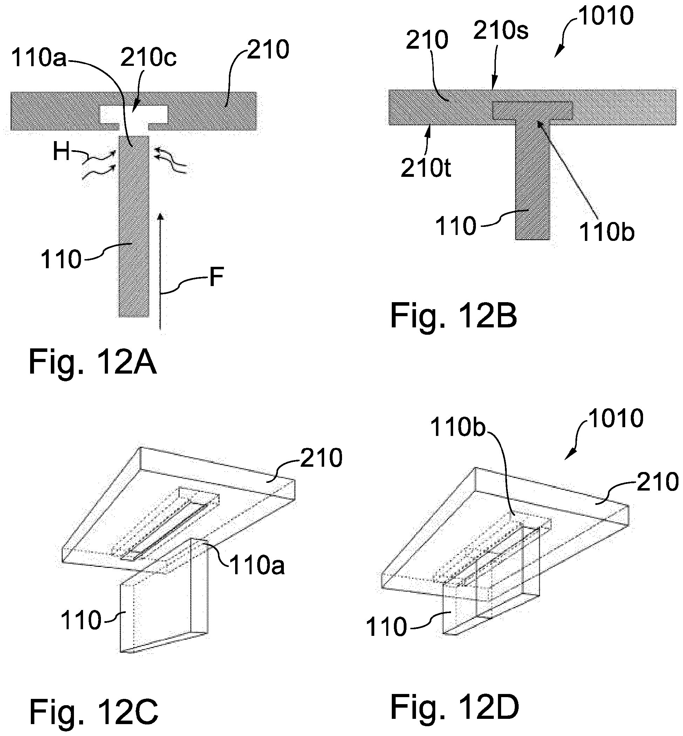

A tenth embodiment is illustrated in Figs. 12A-D. The method shown in Figs. 12A-D can be performed without using any tooling for connecting a first and second part 110 and 210 to form an assembly or component 1010. Both the first and second parts 110, 210 are 3D-printed, e.g. by depositing filaments, in particular using a thermoplastic material, and each have a plate-type shape. The part 110 may be formed as a flange or similar. In addition, the second part 210 is formed with a recess 210c in the form of an internal cavity that is open towards one of the main surfaces 210t of the second part 210 and has an approximately rectangular cross-section. Meanwhile, an opposite main surface 210s of the second part 210 is closed at the location of the recess 210c.

To connect the parts 110 and 210, a pre-defined end region 110a of the first part 110 is heated, by introducing heat H, to an increased temperature that is below the glass-transition temperature of the thermoplastic material. A masking material is not used in this embodiment.

The recess or cavity 210c is then used, instead of a separate tool, to deform the pre-defined and softened region 110a. In order to connect the part 110, 210, the pre-defined region 110a, after heating it, is introduced into the recess 210c and further pressed into the recess 210c using a force F. Thereby, the region 110a deforms to form a deformed pre-defined region 110b which fills the recess 210c. The cross-sectional shape of the recess 210c comprises an undercut, as seen in particular in Figs. 12A, 12B. Thereby, when the deformed region 110b has cooled down, the parts 110, 210 are firmly positively connected and the first part 110 cannot be removed from the second part 210. The method of the tenth embodiment may be suitable for situations where tools are not or not easily available, for instance in situations in which a quick and temporary repair is necessary.

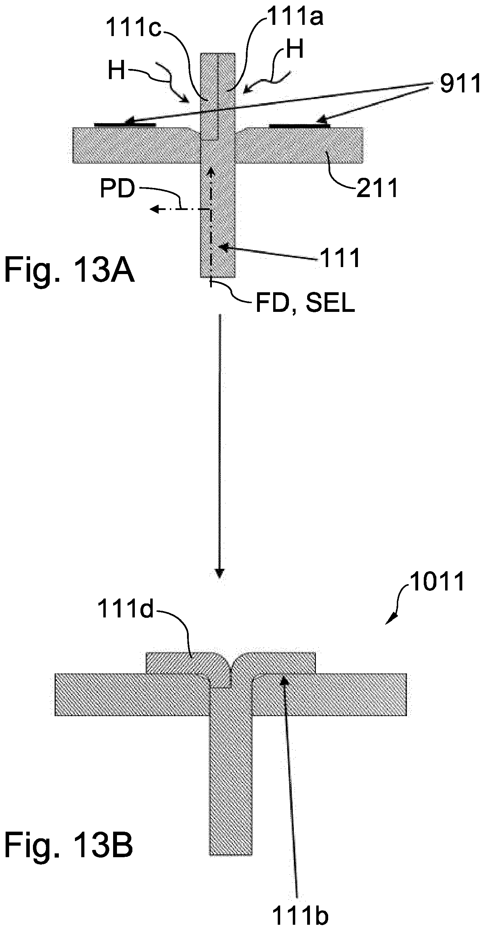

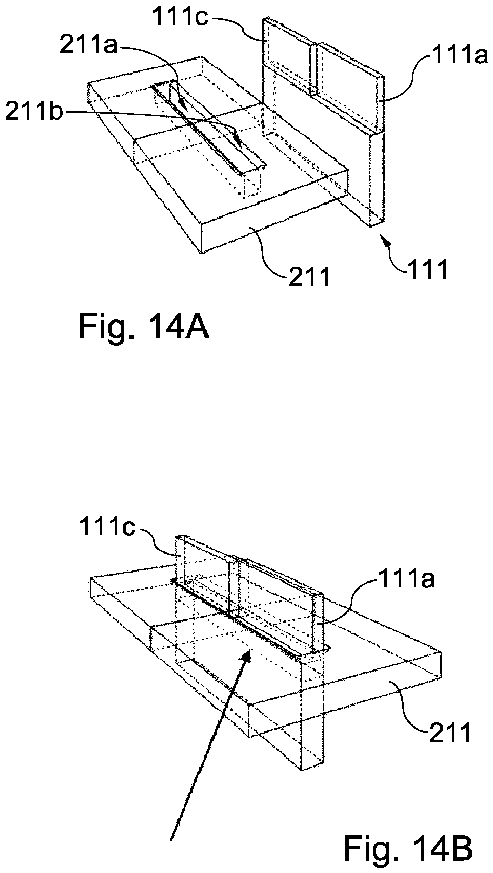

Figs. 13A-B, 14A-D illustrate a method according to an eleventh embodiment, for producing an assembly or component 1011 comprising a first part 111 connected to a second part 211. The first part 111 is configured as a plate- or flange-shaped element, an end region of which is split into two flat sub-flanges or wings. Each of the wings forms a pre-defined region 111a, 111c of the part 111 that is used to connect the first and second parts 111 and 211. Further, each of the pre-defined regions 111a, 111c has a thickness that is smaller than an overall thickness of the first part 111, and in particular corresponds to approximately half of the overall thickness of the part 111. The second part 211 comprises a passage 211a configured as an elongated slot, similar to the passage 201a of the first embodiment, adapted to partially received the first part 111 therein, and having a width that substantially corresponds to the overall thickness of the part 111. The slot-shaped passage 211a comprises a chamfer 211b along the longer sides of the passage 211a where it opens in one of the main surfaces of the second part 211.

Each of the parts 111, 211 is 3D-printed, e.g. by depositing filaments or alternatively by SLS or SLA, for example. In particular, the parts 111 and 211 are made from a thermoplastic material. An exemplary filament direction FD, printing direction PD and surface of extension of layers SLE are indicated in Fig. 13A for the first part 111.

In order to connect the first and second parts 111, 211, the first part 111 is introduced into the passage 211a in such a manner that the pre-defined regions 111a, 111c protrude from the passage 211a. Preferably, the largest portion of each of the pre-defined regions 111a, 111c protrudes from the passage 211a.

Then, heat H is introduced into each of the pre-defined regions 111a, 111c, see Fig. 13A, to increase the temperature within each of these regions at least locally. The increased temperature reached by the heating is still below the glass-transition temperature of the thermoplastic from which the first part 111 is made. During the introduction of heat H, the surface of the part 211 from which the pre-defined regions 111a, 111c protrude is protected using masking material 911, e.g. aluminum tape. The masking material 911 is arranged at a distance from the passage 211a on both sides of the latter, to avoid trapping the material 911.

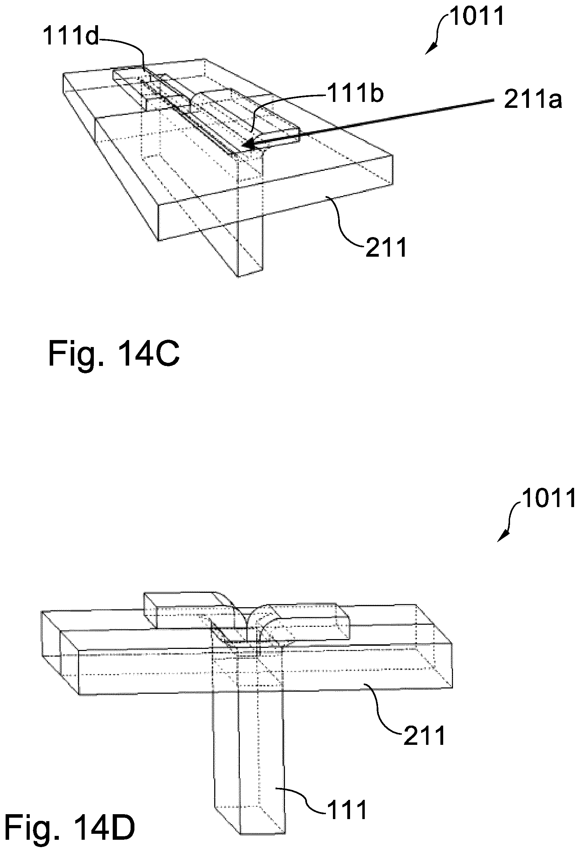

The softened pre-defined regions 111a, 111c are then bent into opposite directions, as shown in Fig. 13B and Figs. 14C, 14D, to form deformed pre-defined regions 111b, 111d respectively. The deformed regions 111b, 111d engage the chamfers 211b as well as the outer main surface of the second part 211, and thereby after cooling positively connect the parts 111, 211.

The eleventh embodiment may be formed without special tooling or with reduced tooling for deforming the pre-defined regions 111a, 111c. Moreover, the assembly or component 1011 has a high structural stability.

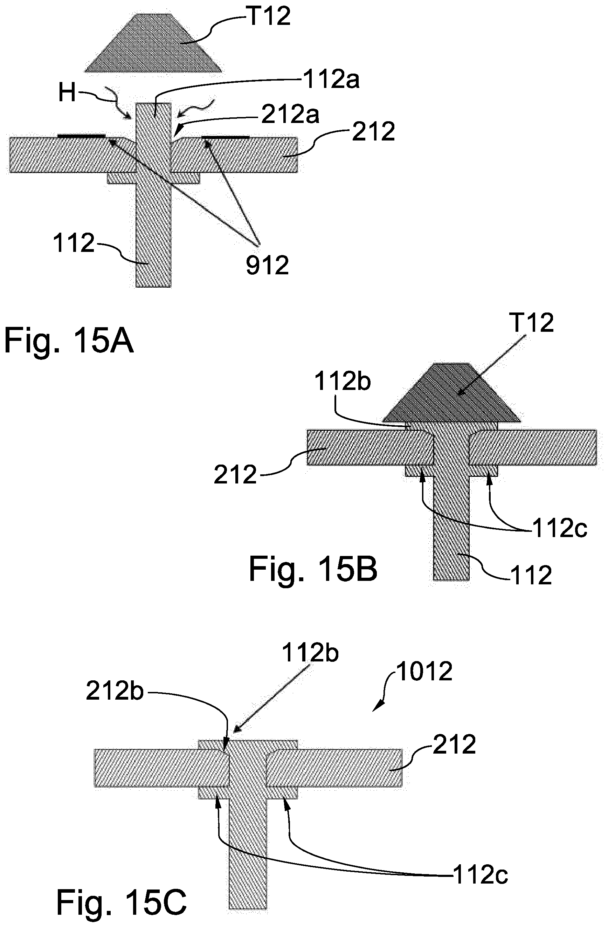

Figs. 15A-C illustrate a method of producing an assembly or component 1012, according to a twelfth embodiment by connecting a first part 112 and a second part 212, each being a 3D-printed part, for example made by depositing filaments or by SLS or SLA, preferably from a thermoplastic. The first part 112 may or may not be rotationally symmetric and the second part 212 correspondingly comprises a passage 212a that is rotationally symmetric or not.

The first and second parts 112, 212 substantially correspond to the parts 101, 201, respectively, of the first embodiment, except for a pre-defined region 112c which acts as a stopper and extends in the manner of a ring peripherally along the contour of the flange-shaped first part 112, at an intermediate position thereof. The connection of the first and second parts 112 and 212 is established by heating a pre-defined region 112a and deforming the region 112a using a die-type tool T12, similar to the first embodiment. Protection for the second part 212 against heat H is provided by masking material 912. The twelfth embodiment differs from the first embodiment in that the deformed pre-defined region 112b is not flush with an outer surface of the second part 212, and hence provides a larger contact area, extending beyond a chamfer 212b of the passage 212a through which the first part 112 is inserted. In the finished state of the assembly or component 1012, see Fig. 15C, the ring-shaped pre-defined region 112c and the deformed pre-defined region 112b abut on opposite surfaces of the second part 212, thereby providing the assembly or component 1012 with further increased structural stability.

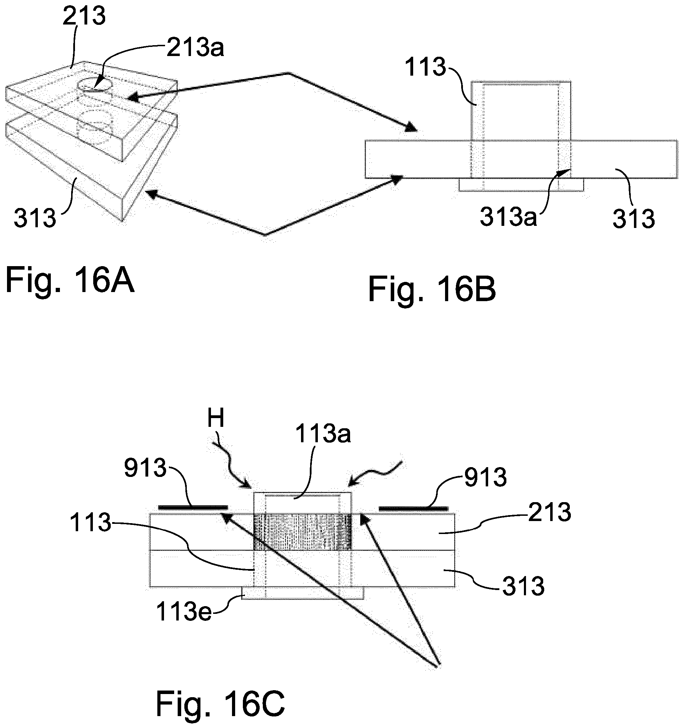

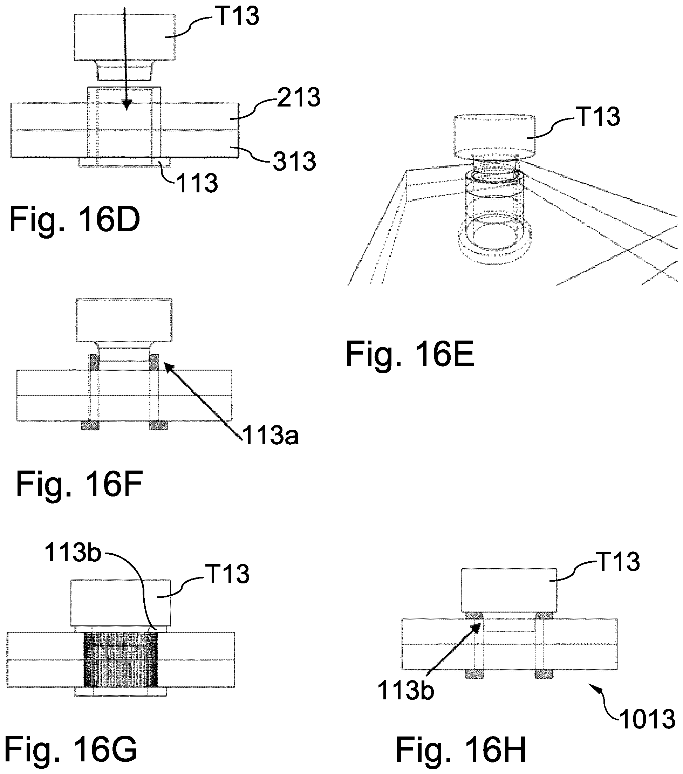

Figs. 16A-H illustrate a method of producing an assembly or component 1013 according to a thirteenth embodiment. In the finished assembly or component 1013, a first collar-shaped part 113 positively connects a second part 213 and a third part 313. Each of the first, second and third parts 113, 213, 313 is preferably 3D-printed, in particular from a thermoplastic material. The second and third parts 213, 313 are each formed as a plate having a passage 213a and 313a, respectively, shaped in the manner of a round, in particular cylindrical, through-hole. The first part 113 is configured as a type-shaped element that is flanged on one side and accordingly comprises a pre-defined, flange-shaped region 113e.

In order to positively connect the second and third parts 213 and 313 to each other, the parts 213 and 313 are arranged in such a way that the passages 213a, 313a match and form a continuous through-hole, into which then the first part 113 is introduced. This configuration is shown in Fig. 16C, in which the flange-shaped pre-defined region 113e abuts on an outer surface of the third part 313.

In a next step, heat H is introduced into pre-defined, annular region 113a of the first part 113 which protrudes beyond an opposite outer surface of the second part 213. In a manner analogous to the preceding embodiments, the heat H may be introduced e.g. using a hot-air gun or infrared radiator. The outer surface from which the pre-defined region 113a protrudes is protected, in an area surrounding the passage 213a and the first part 113, using a masking material 913, e.g. aluminum tape. The pre-defined region 113a is heated to an increased temperature below the glass-transition temperature of the thermoplastic from which the part 113 is made.

Thereafter, in a further step, the pre-defined region 113a is deformed using a die as a tool T13, which deforms the softened region 113a into a deformed pre-defined region 113b shaped as a second flange. The second flange 113b abuts on the outer surface of the second part 213. After the region 113b has cooled, the second and third parts 213 and 313 are positively connected via the first part 113. The thirteenth embodiment may be used in particular for shear-loaded applications.

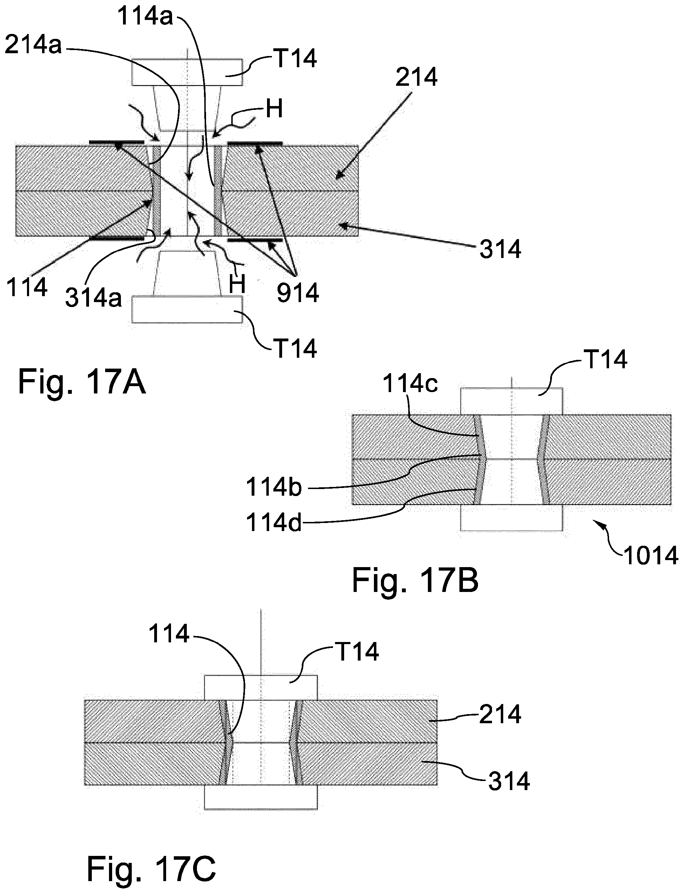

A fourteenth embodiment is shown in Figs. 17A-C, in which a tube-shaped first part 114 connects a plate-shaped second part 214 and a plate-shaped third part 214 to form an assembly or component 1014. Different from the thirteenth embodiment, the first part 114 is, in the finished assembly or component 1014, flush with outer surfaces of the parts 214, 314. The first, second and third parts 114, 214, 314 are each preferably 3D-printed in layers, in particular from a thermoplastic.

In an initial state, as obtained by 3D-printing, the first part 114 is a cylindrical tube or collar. Moreover, each of the second and third parts 214, 314 comprises a passage 214a and 314a. Each of the passages 214a, 314a has a round cross-sectional shape but widens in a conical manner from one surface of the first or second part 214 to the other surface of that part 214 or 314, respectively. In other words, each passage 214a, 314a is bounded by a conical inner surface.

In order to form the assembly or component 1014, the second and third parts 214 and 314 are arranged in a configuration in which narrow ends of the passages 214a and 314a are arranged adjacent to each other, in such a way that a through-opening is formed by the combined passages 214a, 314a which widens in both directions, starting from a contact surface of the parts 214, 314. Then, the first part 114, which is still cylindrical, is inserted into that through-opening.

In a next step, heat H is applied to soften a pre-defined region 114a, which may be confined to a region near the contact surface of the parts 214, 314 or may even encompasses substantially the entire first part 114. In this manner, the pre-defined region 114a is heated to an increased temperature below the glass transition temperature of the thermoplastic. The heating is facilitated by masking the opposite outer surfaces of both parts 214 and 314, in the vicinity of the passage 214a and 314a respectively, by applying a masking material 914, e.g. a metallic tape.

In a further step, using two tools T14 which are preferably identical and are partially cone-shaped, the first part 114 is deformed by deforming the pre-defined region 114a in such a way that thereafter, the deformed region 114b as well as neighboring regions 114c and 114d on both sides of the deformed region 114b closely follow the double-cone shape of the combined passages 214a, 314a. Thus, the part 114 is arranged flush with the outer surfaces of the parts 214, 314 and cannot be unintentionally removed from the combined through-hole. The fourteenth embodiment is suitable in particular for shear-loaded applications.

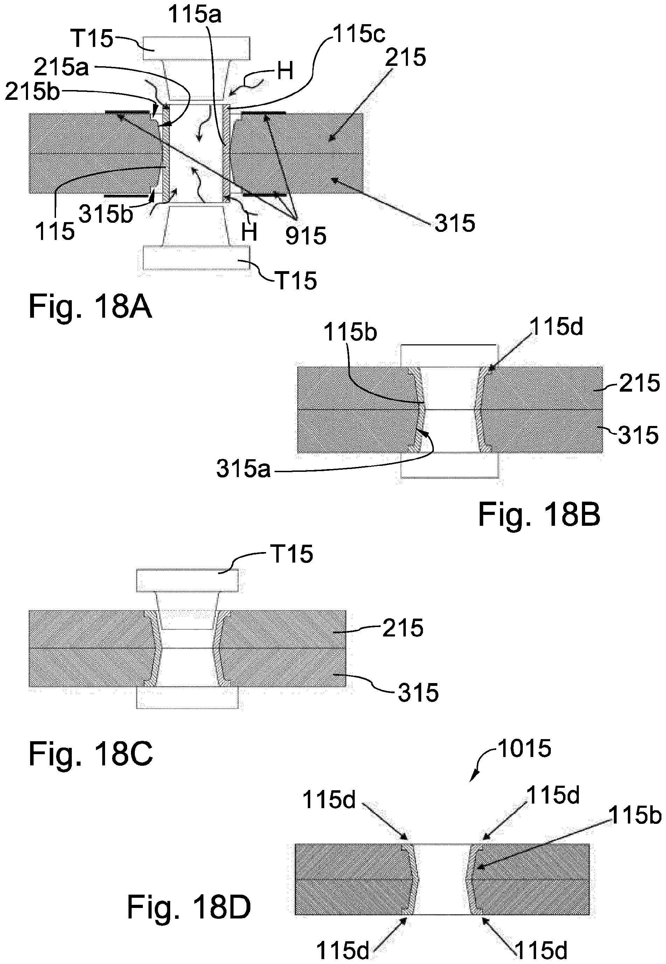

Figs. 18A-D illustrate a fifteenth embodiment, which is a variant of the fourteenth embodiment. An assembly or component 1015 is formed by connecting second and third plate-shaped parts 215 and 315 via a first, tube-shaped part 115. The fifteenth embodiment differs from the embodiment of Figs. 17A-C in that the 3D-printed parts 215 and 315 are provided, during the printing step, with passages 215a and 315a, respectively, which are not only bounded by conical surfaces in the same manner as in the fourteenth embodiment, but additional are provided with recessed regions 215b, 315b extending around the entrance of each of the passages 215a, 315a.

To form the assembly 1015, the part 115 is heated by introducing heat H in particular in a central pre-defined region 115a near a contact surface of the parts 215 and 315, as well as in outer pre-defined regions 115c around both end-side openings of the first part 115. Masking material 915 is applied to protect both parts 215 and 315. Using two preferably identical tools T15, the part 115 is deformed as in the fourteenth embodiment to assume a double-cone-type shape. Additionally, the softened regions 115c are deformed and pressed into the recessed regions 215b and 315b, thereby forming deformed pre-defined regions 115d. The fifteenth embodiment provides an assembly or component 1015 that is particularly suitable for applications in which both shear loads, parallel to the contact surface of the parts 215, 315, as well as tensional loads along an axis of the first part 115 and transverse to the parts 215, 315 must be expected.

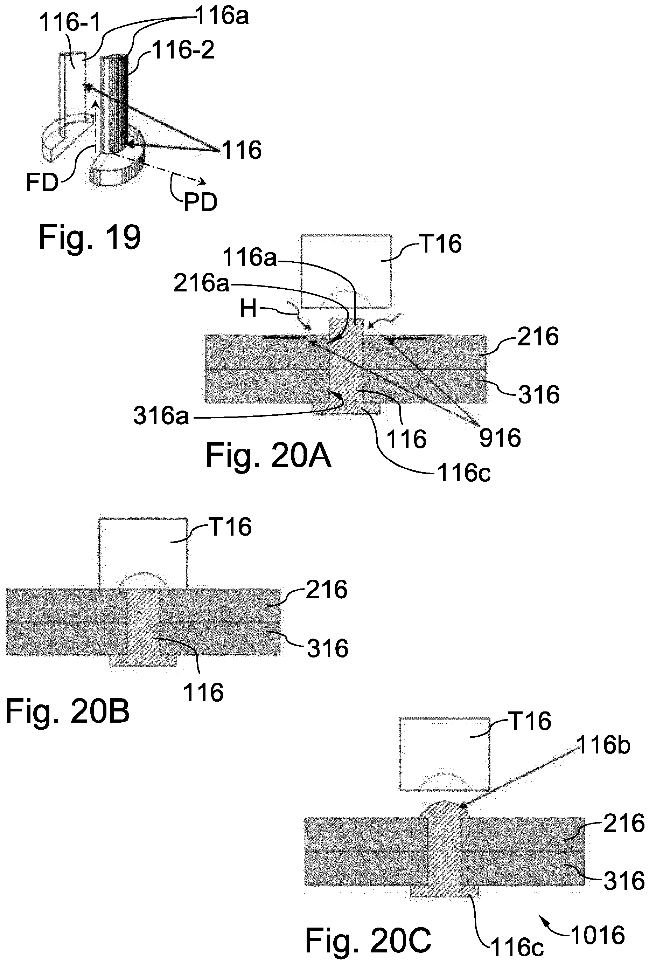

A method for producing an assembly or component 1016 according to a sixteenth embodiment is illustrated in Figs. 19, 20A-C. The assembly or component 1016 comprises a first part 116 which is formed with two pieces 116-1 and 116-2, which are each 3D-printed. An exemplary, preferred printing direction PD and filament direction FD for a case of 3D-printing the piece 116-2 by depositing thermoplastic filaments is shown in Fig. 19. After assembling the first part 116 by arranging the pieces 116-1 and 116-2 adjacent to each other is configured as a thermoplastic, rivet-type solid element, having a substantially cylindrical elongate body and a pre-defined region 116c shaped as a peripheral flange at one end of the elongate body.

In order to connect a second part 216 and a third part 316 via the first part 116, each of the second and third parts 216, 316 comprises a passage 216a and 316a respectively. The parts 216, 316 are arranged in such a configuration that the passages 216a, 316a match, and then, the elongate body of the first part 116 is introduced into the passages 216, 316 until the flange 116c abuts on an outer surface of the third part 316.

In a next step, heat H is introduced into a pre-defined end region 116a of the first part 116 which protrudes from the opposite outer side of the second part 216. The region 116a is thus heated to an increased temperature below the glass-transition temperatures of the thermoplastic. Analogous to the preceding embodiments, the second part 216 is protected against the heat H, which may be provided by a hot-air gun or infrared radiator, by masking material 916 disposed around an entrance of the passage 216a, at a distance therefrom, see Fig. 20A.

The heated and thereby softened region 116a is then deformed, using a die-type tool T16, into a rivet head, which in Figs. 20B-C is shaped in exemplary manner as a segment of a sphere but, in variants, may be shaped differently.

After removing the tool T16 and cooling of the deformed pre-defined region 116b, the parts 216 and 316 are firmly positively connected via the 3D-printed rivet 116, initially provided in two pieces 116-1, 116-2, which may be identically shaped and form two halves of the part 116. As the pieces 116-1, 116-2 are printed in layers in a flat position, with the printing direction being oriented as shown in Fig. 19, the filaments will extend along a longitudinal direction of the rivet 116. Thereby, the finished connection has advantageous mechanical properties and is strong.

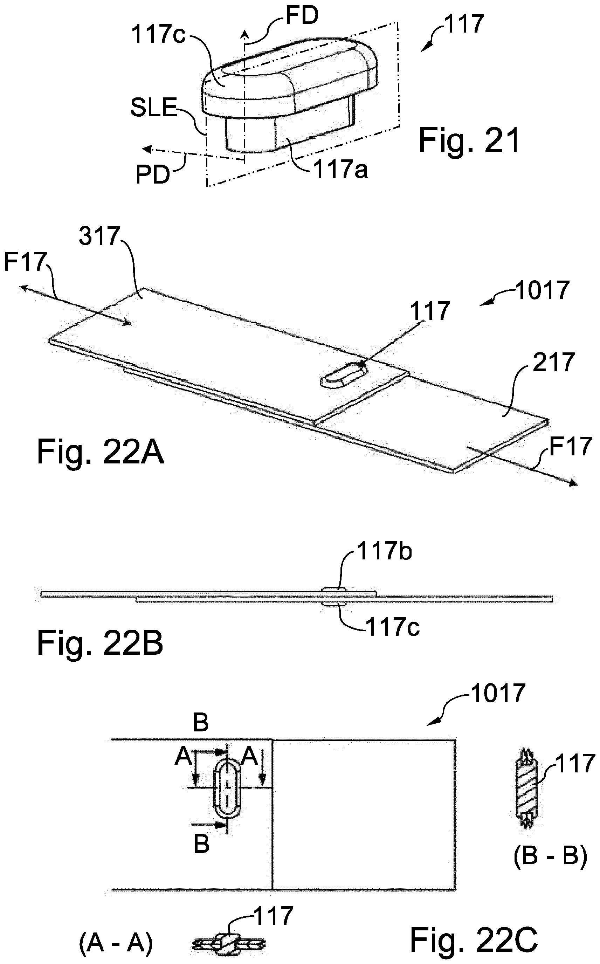

While in line with the sixteenth embodiment, the first part or rivet 116 is, as a whole, substantially rotationally symmetric, having a cylindrical body and cylindrical flange, it may be useful and preferable to produce a rivet-type element that is not cylindrical. This is illustrated with reference to a seventeenth embodiment in Figs. 21, 22A-C and contributes to optimizing stress distribution and transfer of loads between the connected parts.

Using 3D-printed, e.g. by deposition thermoplastic filaments, a first part 117 is produced which includes a body having an outer cross-sectional shape that differs from a circle, and, in Fig. 21, is elongate with rounded narrow ends. To the body, a pre-defined region 117c shaped as a flange with a rounded outer edge is joined. The flange 117c protrudes beyond the body along the entire outer contour of the part 117. Preferably, the first part 117 is 3D-printed in two pieces, analogous to the sixteenth embodiment. Fig. 21 illustrates in schematic manner a printing direction PD, a filament direction FD and a surface of extension of the printed layers SLE, which also illustrates a plane along which the two pieces forming the part 117 are assembled.

The positive connection of second and third parts 217, 317, which in Figs. 22A-C are illustrated as plate-shaped parts, is established in the same manner as described above for the sixteenth embodiment with reference to Figs. 20A-C. The seventeenth embodiment may in particular be useful for situations in which the parts 217, 317 are subjected to tension forces F17, see Fig. 22A, whereby the first part 117 is mainly subjected to shear load.

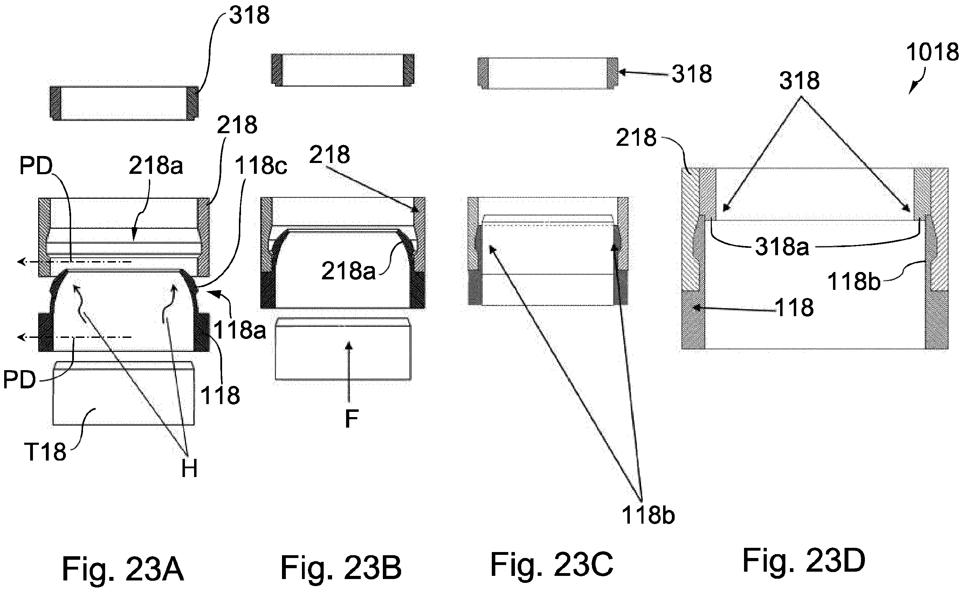

A method of producing an assembly or component 1018 including a first part 118 connected to a second part 218, in accordance with an eighteenth embodiment, is illustrated in Figs. 23A-D. Each of the first and second parts 118, 218 is a 3D-printed tube section. The parts 118, 218 may be 3D-printed in layers by depositing thermoplastic filaments, e.g. PEI filaments. An exemplary printing direction PD, transverse to the layers, is illustrated in Fig. 23A. Alternatively, the printed direction PD may be perpendicular to the plane of the drawing. In Figs. 23A-D, both parts 118, 218 are configured to be rotationally symmetric, but it is conceivable and can be useful to provide the parts 118, 218 with a different contour.

The first part 118 is formed, at one end thereof, with a peripherally extending, protruding rim 118a as a pre-defined region. The rim 118a has a wall thickness which is smaller than a wall thickness of a main portion of the tube-shaped part 118. Further, the region 118a is, in a longitudinal cross-section of the part 118, shown in Fig. 23A, initially curved towards a hollow interior of the first part 118.

The second part 218 is formed, at one end thereof, with a pre-defined region 218a configured as a peripherally extending groove. Further, the pre-defined region 118a of the first part is provided with an outer, peripheral, ridge-like geometry 118c capable of positively engaging with the groove 218a. In the initially printed state of the parts 118, 218, the pre-defined region 118a of the first part 118 can be easily introduced into the hollow interior of the second part 218, where the pre-defined region 218a is formed, due to the inwardly-curved initial shape of the rim 118a.

In order to connect the parts 118, 218 and form the assembly or component 1018, heat H is introduced into the pre-defined region 118a, in order to increase the temperature of the region 118a to an increased temperature below the glass-transition temperature of the thermoplastic from which the first part 118 has been made by 3D-printing. After heating, the first and second parts 118, 218 are arranged in a pre-defined configuration by inserting the first part 118 into the second part 218. This is performed in such a manner that the heated pre-defined region 118a extends into the hollow interior of the second part 218. In this state, shown in Fig. 23B, the ridge-like geometry 118c does not yet engage the groove forming the pre-defined region 218a.

Then, a tool T18 in the form of a cylindrical die is introduced into the hollow interior of the first part 118, from an open end thereof, and pressed against the rim-shaped pre-defined region 118a. The region 118a, softened by the heating process, is thereby deformed in an outward direction, in order to bring the ridge-like geometry 118c into positive engagement with the groove of the pre-defined region 218a. This is illustrated in Fig. 23 C. The pre-defined region 118a is then allowed to cool. Afterwards, already a positive connection of the parts 118, 218 has been established.

In order to further secure the connection of the first and second parts 118, 218, a third part 318, shaped as a securing collar, can be introduced into the second part 218 from an open end thereof which is located opposite to the end of the second part 218 to which the first part 118 is connected. This step is illustrated in Fig. 23D. The third part 318 may be introduced before or after cooling of the deformed pre-defined region 118b and comprises a small ridge protruding from an axial, annular end region of the third part 318. The ridge 318a engages a axial end of the deformed pre-defined region 118b from an inner side, i.e. from the side of the hollow interior of the first part 118, and maintains the region 118b in place. In this manner, the region 118b is blocked in its engaged position, which provides the connection of the parts 118, 218 with additional reliability. In some situations, however, it may be acceptable to omit the securing collar 318.

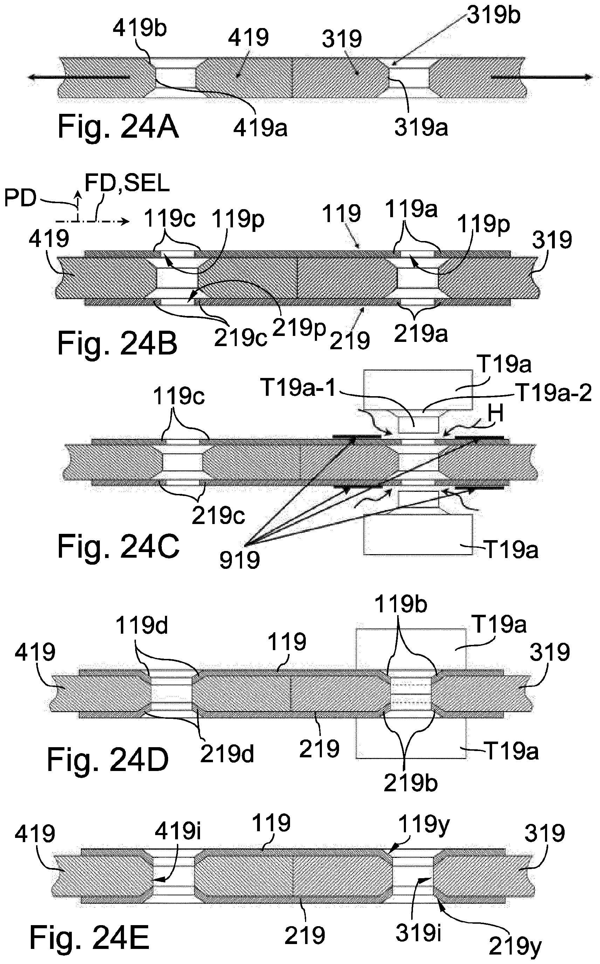

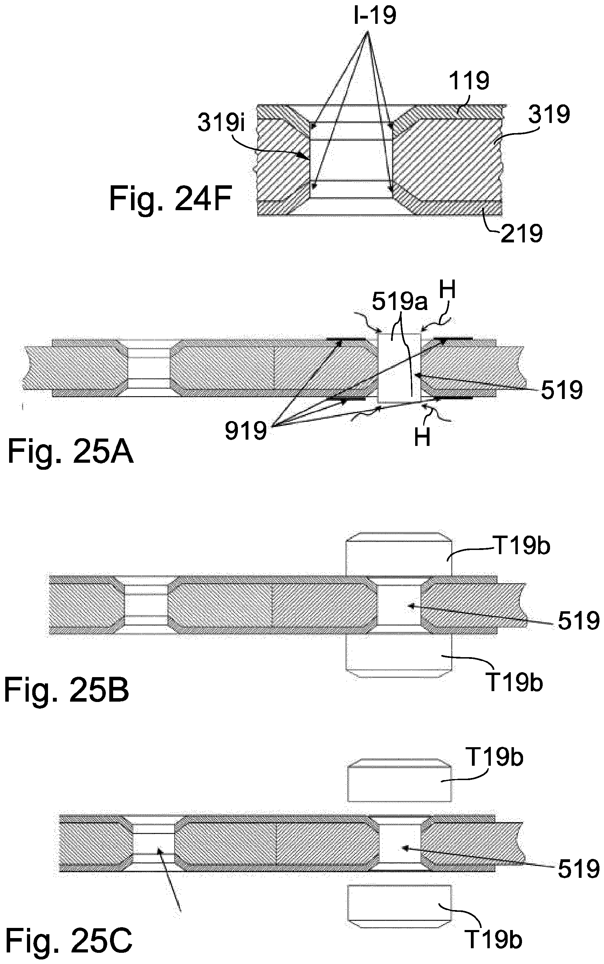

A method of producing an assembly or component 1019 in accordance with a nineteenth embodiment is illustrated in Figs. 24A-F, 25A-E. In line with the nineteenth embodiment, two plate-type first and second parts 119, 219 connect, in cooperation with each other as well as with fifth and sixth parts 519, 619, two further, plate-type third and fourth parts 319, 419 in a manner capable of supporting very high loads, in particular high tension loads acting on the third and fourth parts 319, 419. The nineteenth embodiment may thus be useful for applications in which high load transfer and/or high reliability is/are desired.

The method of the nineteenth embodiment comprises providing the first and second parts 119, 219 by 3D-printing in layers, e.g. by depositing filaments, for example of a thermoplastic such as e.g. PEI. Moreover, the third and fourth parts 319, 419 may each be 3D-printed in this manner as well. Exemplary printing and filament directions PD and FD for the first to fourth parts 119, 219, 319, 419 are illustrated in Fig. 24B.

Each of the third and fourth parts 319, 419 is provided with a passage 319a or 419a, respectively. In the exemplary embodiment in Figs. 24A-F, 25A-E, the passages 319a and 419a are circular through-holes. Each of the passages 319a, 419a is provided with chamfers 319b, 419b along both outer edges thereof, for better load transfer, as will be explained below. Moreover, each of the first and second parts 119, 219 is provided with two passages 119p, 219p, each formed as circular through-holes as well, in exemplary manner.

In a method step illustrated in Fig. 24A, the third and fourth parts 319 and 419 are positioned adjacent to each other, in such a manner that their outer surfaces are substantially parallel and flush.

In a further step illustrated in Fig. 24B, the first and second parts 119, 219 are arranged in parallel to the arrangement of the third and fourth parts 319, 419, in such a way that the third and fourth parts 319, 419 are each arranged between the first and second parts 119, 219, which each contact outer surfaces of both the third and fourth parts 319, 419. The third and fourth parts 319, 419 are thus sandwiched between the first and second parts 119, 219, which may be designated as top and bottom fixation plates 119, 219. In this configuration obtained in this step, see Fig. 24B, the passage 319a is coaxial with one passage 119p and one passage 219p, and the passage 419a is coaxial with another passage 119p and another passage 219p.

In a next step, heat H is introduced into pre-defined regions 119a and 219a, which are annular regions of the first part 119 and second part 219 around the passages 119p, 219 coaxial with the passage 319. The pre-defined regions 119a, 219a are accordingly heated to an increased temperature, which is below the glass-transition temperature of the thermoplastic from which the parts 119, 219 are made. The introduction of heat H is illustrated in Fig. 24C. The pre-defined regions 119c, 219c are heated in the same manner. Masking material 919 is used to protect the first and second parts 119, 219 in regions beyond the pre-defined regions 119a, 219a, 119c, 219c.

After heating, in a next step, see Fig. 24C-D, the heated pre-defined regions 119a, 219a, 119c, 219c are deformed using die-type tools T19a, which are preferably identical and which are pressed into the passages 119p, 219p. In this deforming step, the pre-defined regions 119a, 219a, 119c, 219c are pressed into the chamfer 119b, 219b and conformed to the shape of the chamfer 119b, 219b. Thereby, after cooling of the deformed pre-defined regions 119b, 119d, 219b, 219d, the third and fourth parts are already positively connected by engagement of each of the first and second parts 119, 219 with each of the third and fourth parts 319, 419.

The dies T19a are configured each with a substantially cylindrical forward section T19a-1 and a conical intermediate section T19a-2. Using such tools T19a, the ring-like inner surfaces I-19 are shaped as cylindrical surfaces that are flush with the inner cylindrical surface 319i and 419i, respectively, of the passage 319a or 419a, see Fig. 24F. This contributes to improved load transfer by the further, fifth and sixth parts 519, 619, which will be described in the following.

In a next step, illustrated in Fig. 25A, the fifth part 519, which may be configured as a solid fastener made of thermoplastic material, and may be 3D-printed or produced in some other manner from the thermoplastic, is introduced into the passage 319a and through the passages of the first and second parts 119, 219, bounded by the surfaces 119i, 219i. The fifth part 519 may be a solid thermoplastic cylinder.

Then, heat H is applied to pre-defined regions 519a at both ends of the fifth part 519. The first and second parts 119, 219 are protected by masking material 919, which may be the same material 919 used in the step of Fig. 24C that remains on the parts 119, 219.

The heated pre-defined end regions 519a are then deformed using die-type tools T19b, which may be provided with a substantially flat forming surface. The pre-defined regions 519a are thus deformed and conformed to a bevel 119y, 219y, which has been obtained earlier by the deformation of the regions 119a, 219a, see Fig. 24E. A sixth part 619, of the same type as part 519, is installed in the passage 419a. After cooling, the first to sixth parts 119, 219, 319, 419, 519 and 619 are firmly and positively connected to each other, forming the assembly or component 1019.

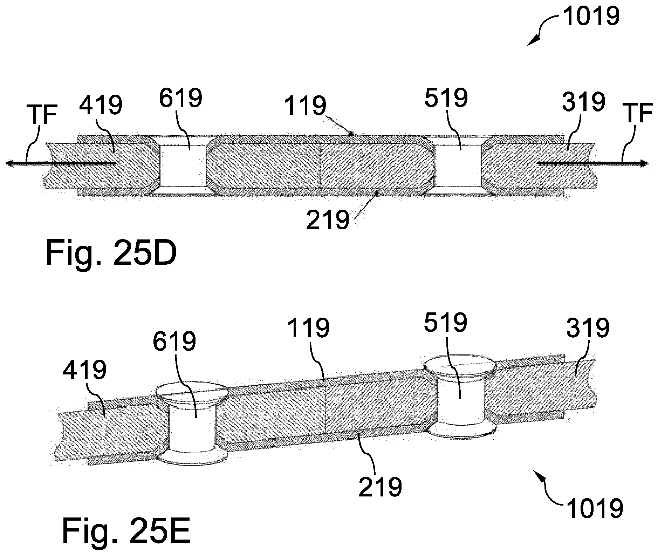

In a variant of the nineteenth embodiment, by 3D-printing the first and second parts 119, 219, the plate-shaped parts 119, 219 may be formed in expedient manner with a variable thickness instead of with a constant material thickness as illustrated in Figs. 24, 25. In this way, the parts 119, 219 may be even better adapted to the particular application and for high loads.

The pre-defined regions 119a, 119c, 219a, 219c, in particular, are 3D-printed regions. Fig. 24B, which illustrates the printing direction PD and the preferred filament direction FD, also makes clear that the surface of extension of the printed layers SEL within the parts 119, 219 is deformed when the regions 119a, 119c, 219a, 219c are deformed, which contributes to the considerable strength of the assembly or component 1019 to support tensional forces TF.

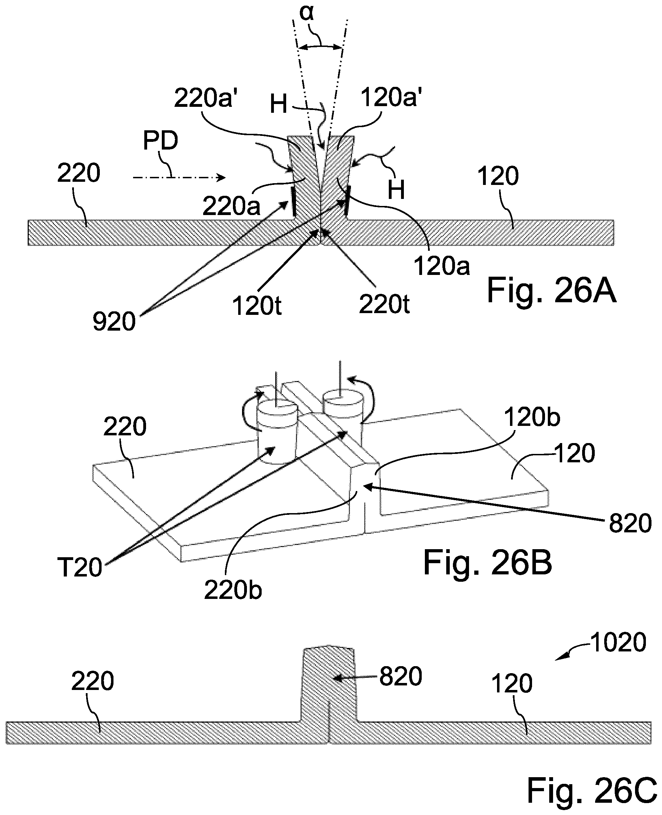

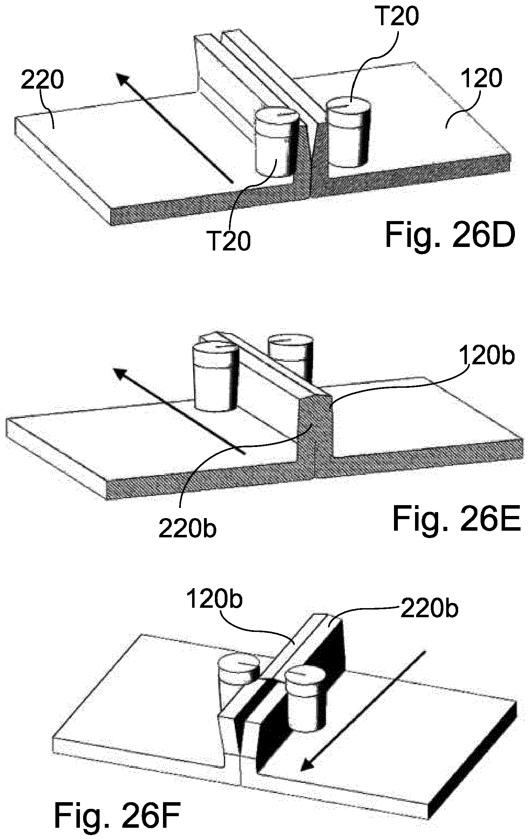

A twentieth embodiment is illustrated in Figs. 26A-F. A first part 120 and a second part 220 are connected to each other to form an assembly or component 1020. The first part 120 and second part 220 are provided by 3D-printing in layers, e.g. by depositing filaments of a thermoplastic. A printing direction PD may be oriented for instance as in Fig. 26A. Each of the parts 120, 220 is provided as a shell-type part, having a wall and a pre-defined region 120a, 220a extending from the wall in the manner of flanges. The parts 120 and 220 are arranged in such a way that the pre-defined regions 120a, 220a face each other. More specifically, as shown in Fig. 26A, foot portions of the pre-defined, flange-type regions 120a, 220a may abut against each other at corresponding surfaces 120t, 220t, while facing surfaces of free end regions 120a' , 220a' of the flanges 120a and 220a form an acute angle α therebetween, in the manner of a V-shape.

Then, heat H is applied to free end portions of the pre-defined regions 120a and 220a, both from an outer side as well as on the diverging surfaces within the angle α. During the heating, the surfaces of the regions 120a, 220a facing each other at the angle α in particular may locally melt or exceed the glass transition temperature. The foot portions of the regions 120a, 220a are protected from the heat H by masking material 920, e.g. aluminum tape.

Then, the pre-defined regions 120a and 220a are deformed and these deformed pre-defined regions 120b, 220b are, in the same step, pressed against each other. Thereby, the angle α is closed and the material of the pre-defined regions 120a, 220a is united in a contact area 820. After cooling, the parts 120, 220 are securely bonded. The deforming and pressing is, in the exemplary embodiment of Figs. 26A-F, accomplished by tools T20 configured as rotating cylinders or rollers. The tool T20 may, in some variants, be configured as a hand-held tool, and a heat source might be embedded in the tool T20.

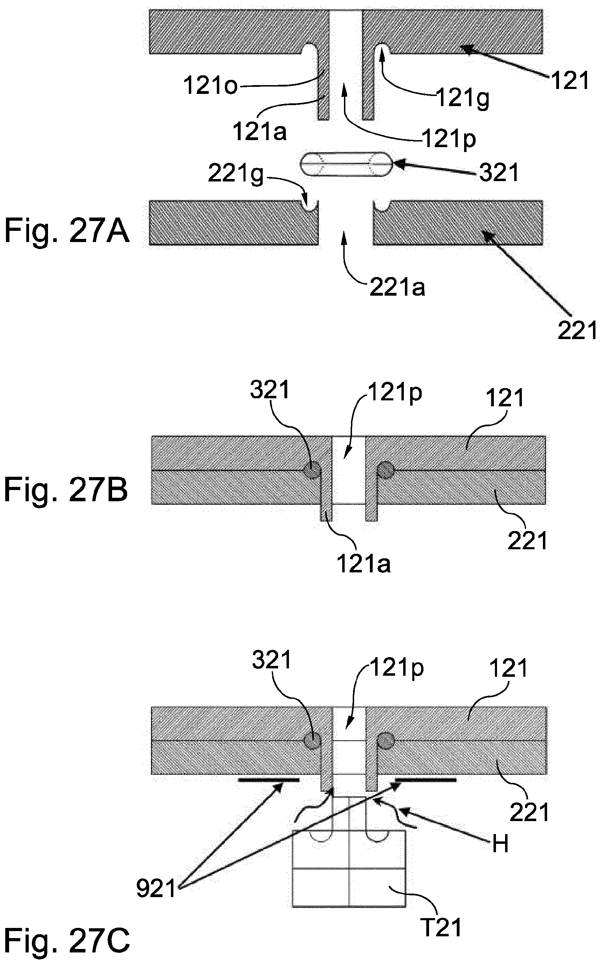

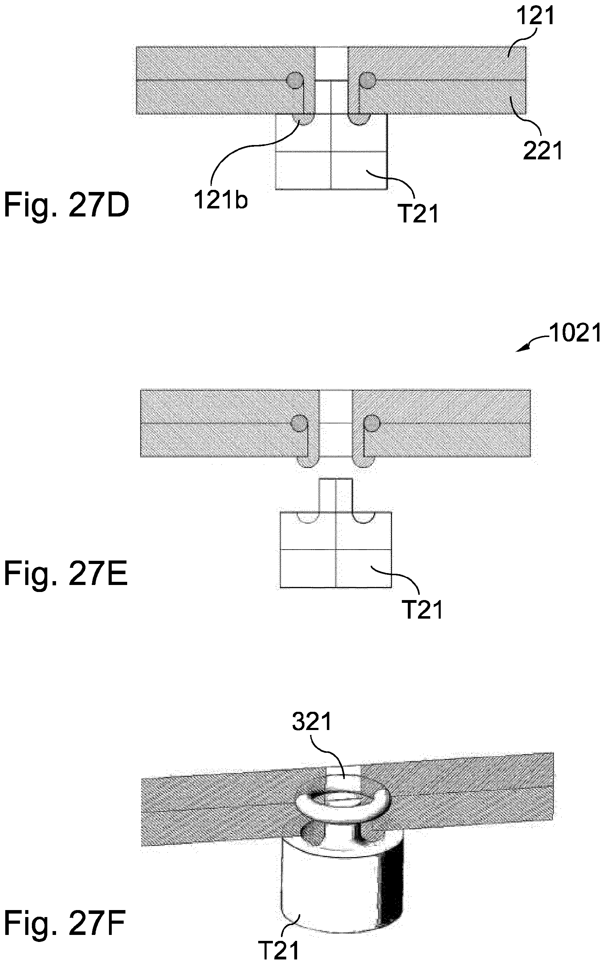

A method of producing an assembly or component 1021 in accordance with a twenty-first embodiment is illustrated in Figs. 27A-F, wherein a first and a second part 121, 221 are connected to each other. Both first and second parts 121, 221 are generally plate-shaped and are 3D-printed parts, preferably made from a thermoplastic material.

The first part 121 is provided with a passage 121p, in particular provided with a circular inner cross-section. The passage 121p extends through a plate-type main body of the first part 121 as well as through a collar 121o formed in the manner of a hollow cylinder. A rounded groove 121g extends circumferentially around the collar 121o, adjacent to the collar 121o and in an outer side of the plate-type main portion.

The second part 221 is formed with a passage 221a, in particular provided with a circular inner cross-section, and with a groove 221g adjacent to the passage 221a and in an outer side of a plate-type main portion of the second part 221.

In order to form the assembly or component 1021, a third part 321 configured as a securing ring having a circular cross-section is provided. The third part 321 may also be produced by 3D-printing. An outer cross-sectional shape of the collar 121o is configured to enable insertion of the collar 121o into the passage 221a. While the collar 121o is being inserted into the passage 221a, the securing ring 321 is placed inside the grooves 121g, 221g, which in cooperation form a ring-shaped cavity having a circular cross-section. The cavity is entirely filled by the securing ring 321.

In a next step, a pre-defined end region 121a of the collar 121o, which protrudes from the second part 221, is heated to an increased temperature below the glass-transition temperature of the thermoplastic. During the application of heat H, a masking material 921, e.g. aluminum tape, prevents the second part 221 from softening. The pre-defined region 121a is then deformed using a die-type tool T21, whereby a deformed pre-defined region 121b of the first part 121 engages the second part 221 around the passage 221a. The masking material 921 is arranged spaced from the passage 221a to avoid trapping the material 921.

Using the ring-shaped third part 321 cooperating with the grooves 121g, 221g, the transfer of loads may be improved and stresses near the contact surface of the parts 121, 221 in the vicinity of the collar 121o can be reduced.

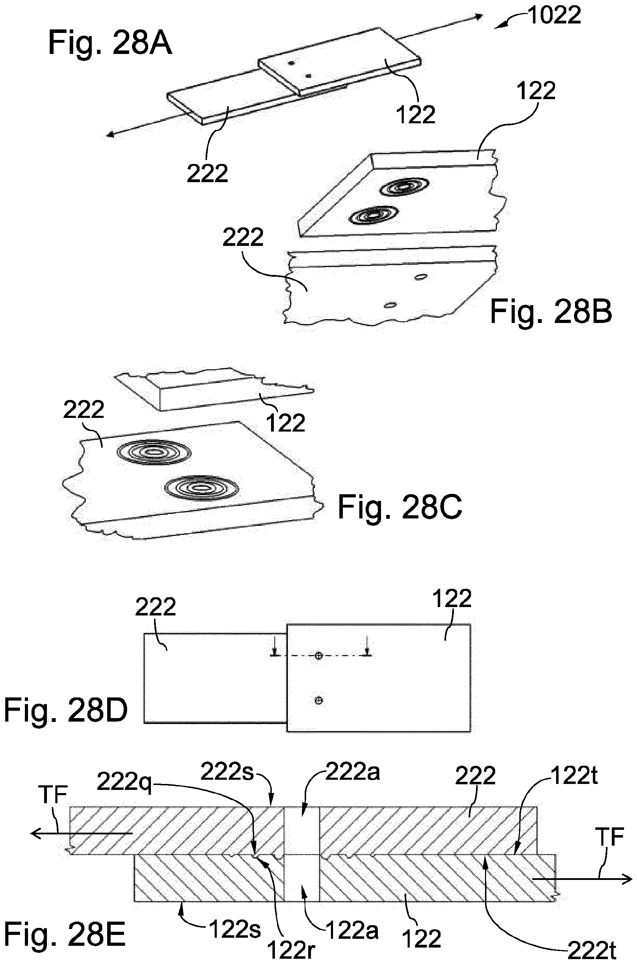

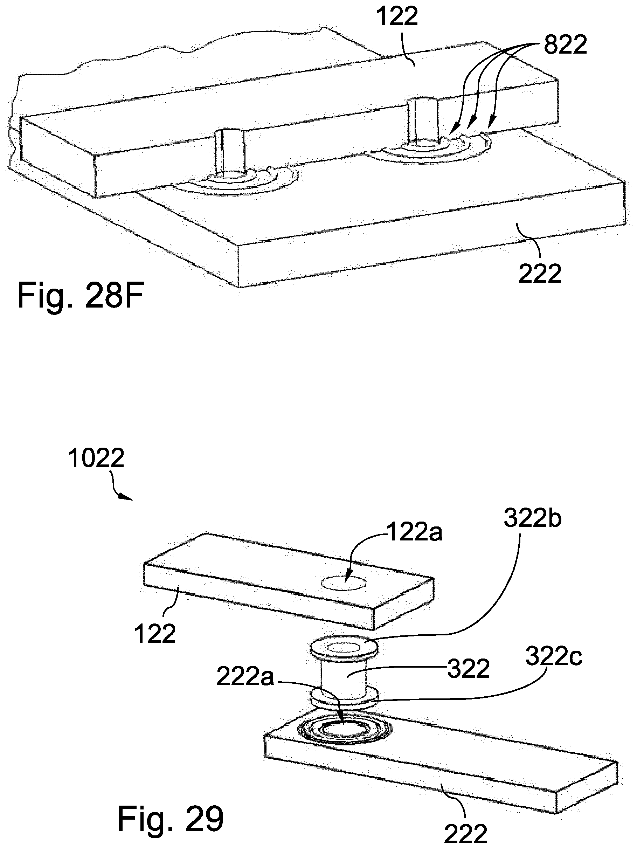

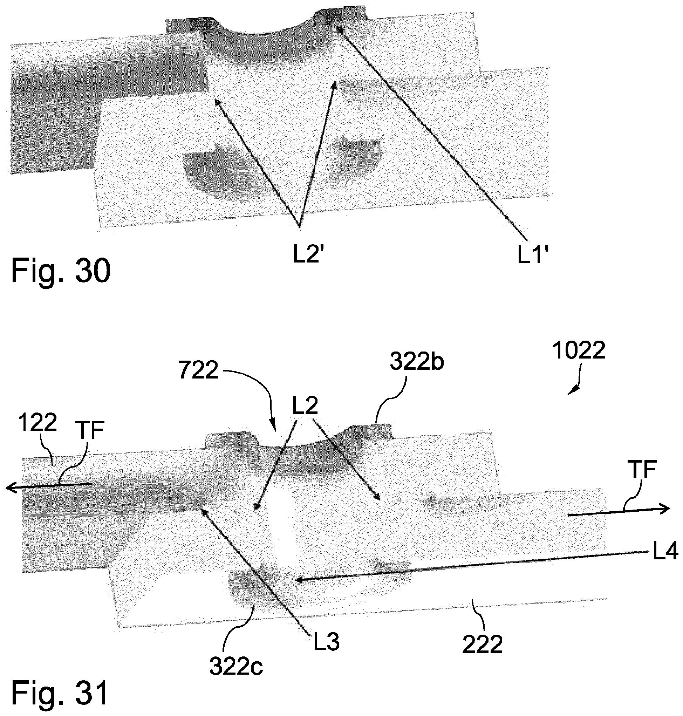

A method of producing an assembly or component 1022 including a first part 122 connected to a second part 222, with each of the parts 122, 222 being 3D-printed, in particular using a thermoplastic material, is illustrated in Figs. 28A-F, 29 according to a twenty-second embodiment. Fig. 31 shows an exemplary result of a finite element simulation (FEM) for an assembly 1022 produced in accordance with the twenty-second embodiment, and Fig. 30 shows a finite element simulation (FEM) for an assembly 1013 according to the thirteenth embodiment, for comparison.

In a first step, the first part 122 and the second part 222 are 3D-printed in layers. Each of the first and second parts 122, 222 generally has a plate-shaped configuration including passages 122a, 222a that are shaped as cylindrical through-holes.

In the twenty-second embodiment, the parts 122, 222 are connected in the manner of a lap joint. The parts 122, 222 are arranged in such a way that the passages 122a, 222a are coaxial, and a collar-type third part 322 is inserted into the resulting combined passage and partially deformed, in the same manner as described above for the thirteenth embodiment. In axial direction of the passages 122a, 222a, the parts 122, 222 are therefore positively connected using flanges 322b, 322c of the collar 322. This is schematically shown in an exploded view in Fig. 29. Moreover, the collar 322 can carry considerable shear loads when applying forces to the parts 122, 222 as indicated by arrows in Fig. 28A.

In this manner, a primary positive connection 722 is therefore established by the collar-shaped third part 322 extending through the passages 122a, 222a.

Furthermore, facing first and second contact surfaces 122t and 222t of the first and second parts 122, 222 are adapted to connect the first and second parts 122, 222 additionally by secondary positive connections 822.

In order to establish the secondary positive connections 822, the first, substantially flat contact surface 122t of the first part 122 is provided with a series of concentrically arranged, groove-shaped recesses 122r that extend in a closed, ring-like manner around the passage 122a. Each of the recesses 122r has a rounded cross-sectional shape, in particular in the form of a half circle. A size, in particular a radius, of the cross-sectional shape of the recesses 122r increases from one recess 122r to the next one in a direction towards the passage 122a. In the example of Figs. 28, 29, three such ring-shaped recesses 122r are provided around each passage 122a.

On the second, flat contact surface 222t of the second part 222, ring-shaped protrusions 222q are provided, which are integrally formed with the second part 222 and correspond in size and shape to the recesses 122r.

When the first and second parts 122 and 222 are arranged such that the passages 122a, 222 are coaxial and the faces 122t, 222t contact each other, the protrusions 222q engage with the recesses 122r and establish the secondary positive connections 822.

With reference now to Figs. 30 and 31, which display mechanical stresses, it may be appreciated that while the connection of two plate-shaped parts by a collar-shaped part in line with the thirteenth embodiment is useful and advantageous, high shear loads lead to considerable stress concentrations especially at location L1', in the vicinity of an outer edge of the passage 213a, which is pressed against a flange of the collar-type insert, and at locations L2' near an outer surface of the collar-type insert at the level of the contact plane between both parts 113, 213.

In comparison, Fig. 31 shows that stress concentrations may be reduced and an improved transfer of shear load from one part 122 to the other part 222 due to tensional loads TF, see Fig. 28E, can be obtained by establishing the secondary positive connections 822. This helps to improve the operational life of the assembly or component 1022. In Fig. 31, some fraction of the load is transferred using the secondary positive connections 822, and the loading of the primary connection 722 is reduced. Furthermore, by the reduction of the size of the interacting recesses 122r and protrusions 222q in a direction outwards from the primary connection 722, the shear load parallel to the faces 122t, 222t is distributed in a further improved manner. Fig. 31 shows for location L3 that the stress flow, in case of the twenty-second embodiment, already starts with the outermost combination of groove 122r and protrusion 222q. A local stress reduction may be obtained at the flanges of part 322, see location L4, and a better distribution of stresses at location L2, where an outer surface of the part 322 acts on the passages 122a, 222a near the contact plane of these parts 122, 222.

The circular, concentric arrangement of grooves 122r and protrusions 222q can be advantageous. Yet, in a variant, the grooves 122r and protrusions 222q may each extend along a straight line and parallel to each other.

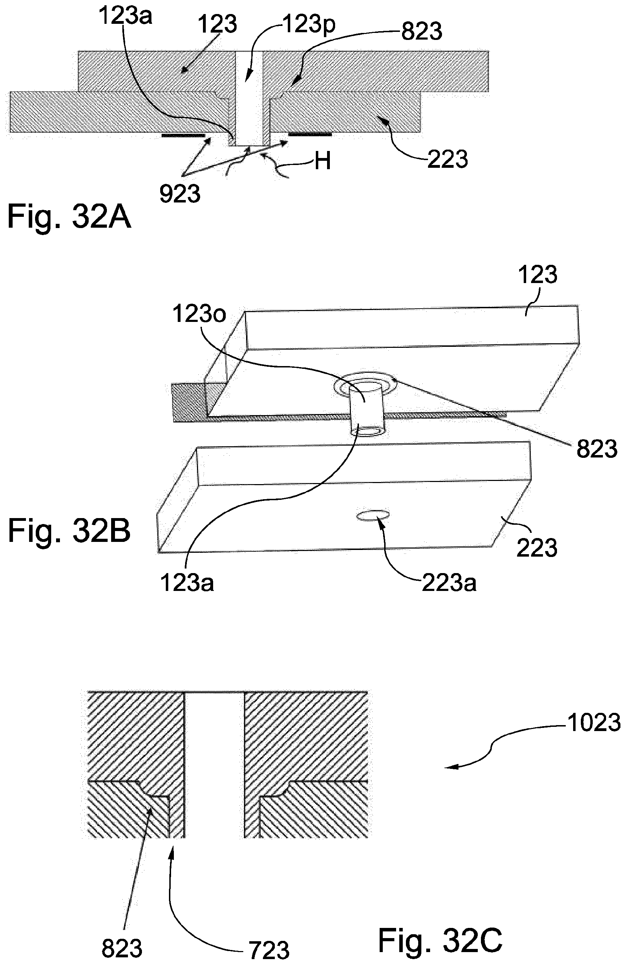

A method of producing an assembly or component 1023 including a first part 123 and a second part 223 connected to each other is illustrated in Figs. 32A-32C, in accordance with a twenty-third embodiment. Each of the parts 123, 223 is 3D-printed in layers, in particular from a thermoplastic material, and generally has a plate-type shape. The 3D-printed layers are, in Fig. 32A, oriented parallel to the plane of the drawing.

Similar to the twenty-first embodiment, the first part 123 is provided with a collar-shaped section 123o that protrudes transversely from a plate-shaped main portion of the part 123 and has a passage 123p. The collar-shaped section 123o is inserted into a passage 223a in the second part 223, which is in particular configured as a round through-hole. A protruding, pre-defined end region 123a of the first part 123 is heated and deformed as discussed above for the twenty-first embodiment. Masking material 923 is used to protect the second part 223.

By deforming the pre-defined region 123a, a primary positive connection 723 of the part 123, 223 is established after cooling. Different from the twenty-first embodiment, the first part 123 comprises a rounded bulge circumferentially encompassing the collar-shaped section 123o and connecting it to a flat surface of the first part 123 which contacts an opposite, flat surface of the second part 223 when the parts 123, 223 are connected. In the connected state, the rounded bulge engages with a corresponding, rounded recess provided in the second part 223 around the passage 223a, and thereby, a secondary positive connection 823 of the two parts 123 and 223 is obtained for better load transfer.

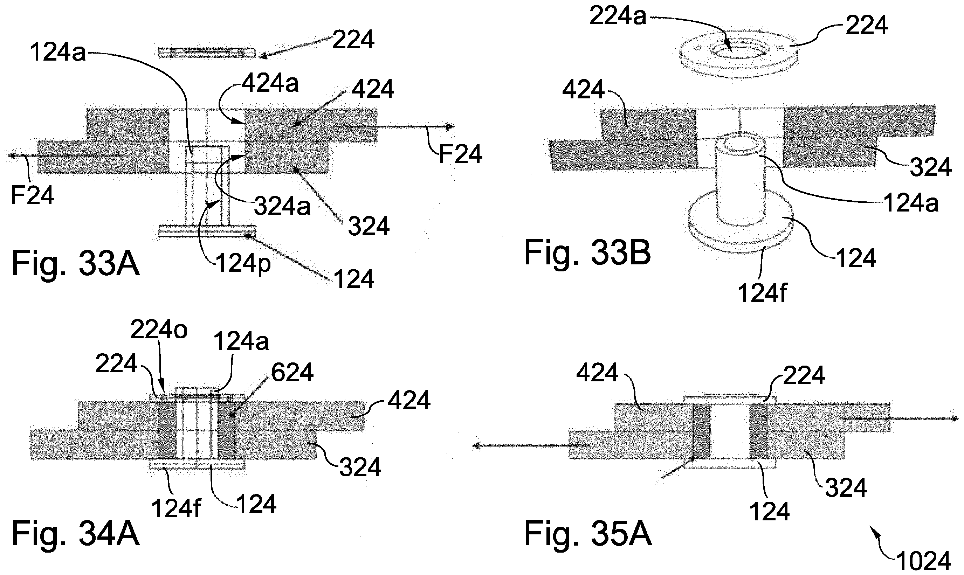

A twenty-fourth embodiment of a method of producing an assembly or component 1024 is illustrated in Figs. 33A-C, 34A-C, 35A-C. The assembly or component 1024 of the twenty-fourth embodiment may be particularly useful for applications in which not only loads are to be transferred, but vibrations occur as well. The twenty-fourth embodiment may, for example, be useful in aerospace applications, where vibrations may often occur, for example are generated by engines.

In accordance with the twenty-fourth embodiment, a first part 124 having a collar-type shape, which includes a ring-like flange 124f on one end thereof as well as a central passage 124p, is provided. Further, a second part 224 is provided which has a shape of a flat ring with a central passage 224a and includes small injection orifices 224o. Moreover, third and fourth parts 324, 424 are provided, which are each plate-shaped and each include a passage 324a and 424a, respectively, which in particular is configured as a round, cylindrical through-hole. The first and second parts 124, 224 are 3D-printed in layers, in particular from a thermoplastic synthetic material. The third and fourth parts 324, 424 may be 3D-printed as well.

In order to form the assembly or component 1024, the third and fourth parts 324, 424 are arranged in such a manner that the passages 324a and 424a are coaxial. The first part 124 is inserted into the resulting through-hole, formed by the combined passages 324a, 424a, until the flange 124f of the first part 124 abuts on an outer main surface of the third part 324. A tube-shaped portion of the first part 124 is then located inside the combined passages 324a, 424a and protrudes from an outer face of the fourth part 424. However, an outer size, e.g. diameter, of the tube-shaped portion of the first part 124 is significantly smaller than an inner size, e.g. diameter, of each of the passages 324a, 424a. In this manner, a ring-shaped cavity 524 is formed around the tube-shaped portion.

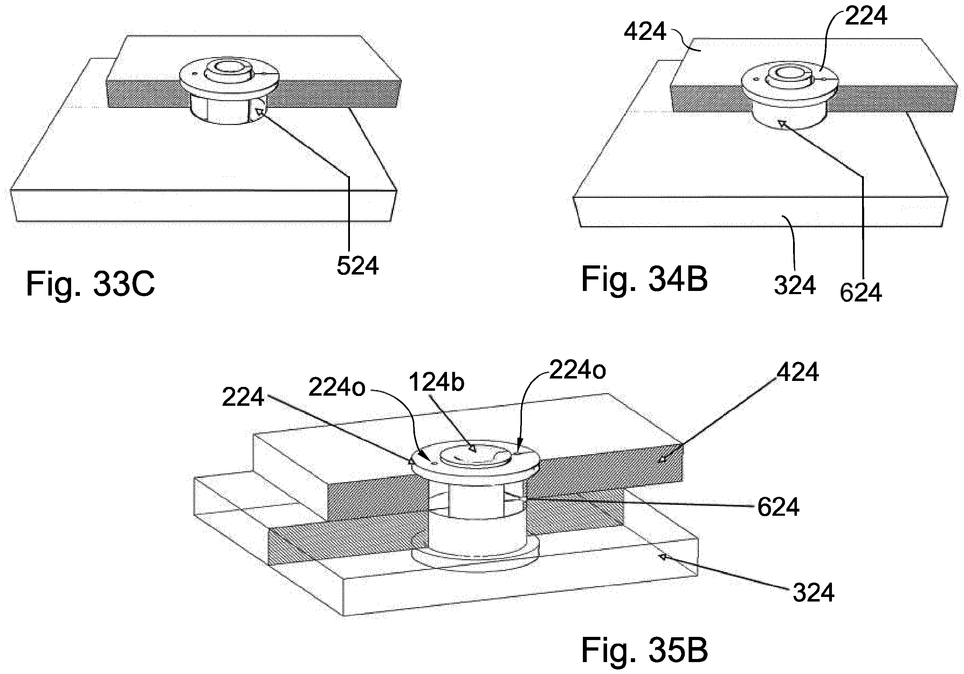

The second part 224 is placed onto an end of the tube-shaped portion of the first part 124 which protrudes from the passage 424a, see e.g. Figs. 34A, 33C. A pre-defined, ring-shaped region 124a protrudes then from the passage 224a. The region 124a is then heated to an increased temperature to soften the ring-shaped region 124a. Masking material, not illustrated in the Figs. 33-35, can be applied as required to prevent further parts from being softened due to applied heat. Further, the heated pre-defined region 124a is then deformed, using a tool which may, for instance, be configured similar to one of the tools T13,T14 or T15. Thereby, after subsequent cooling of the deformed pre-defined section 124b, see e.g. Fig. 35B, the deformed pre-defined region 124b engages the second part 224. In this manner, the first and second parts 124, 224 are positively connected, and the third and fourth parts 324, 424 are positively connect by engagement of the second part 2254 with the fourth part 424 and by engagement of the flange 124f of the first part 124 with the third part 324. The third and fourth parts 324, 424 are thus arranged between the second part 224 and between a portion of the first part 124, which is the flange 124f.

Loads F24, see Fig. 33A, which will act on the finished assembly or component 1024 and are parallel to the main surfaces of the plate-type parts 324, 424, are in the assembly or component 1024 not transferred between the parts 324, 424 directly via the first part 124, but instead to a large extent via an elastomeric mass 624 that is injected into the ring-shaped cavity 524, fills the cavity 524 and hardens therein. The injection of the elastomer in liquid or viscous form is performed via the injection orifices 224o in the second part 224. As the second part 224 and the flange 124f close both axial ends of the cavity 524, except for the orifices 224o, the liquid or viscous elastomeric mass cannot escape prior to hardening. After hardening, the elastomeric mass 624 is still flexible and is capable of dampening vibrations and reducing the transfer of such vibrations from one of the plates 324, 424 to the other one. In the twenty-fourth embodiment, the transfer of the load F24 between the parts 324, 424 thus is accomplished partially via contact of the second part 224 with the fourth part 424 and contact of the flange 124f of the first part 124 with the third part 324, and partially via the elastomer 624.

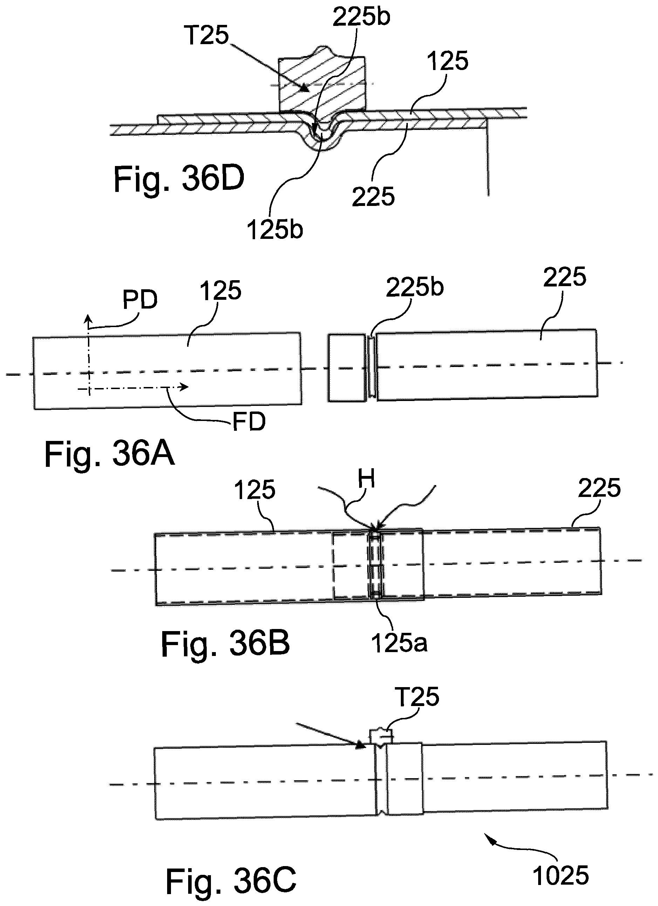

A twenty-fifth embodiment is illustrated in Figs. 36A-D. A first tube-shaped part 125 and a second tube-shaped part 225 are provided by 3D-printing, in particular by depositing filaments, e.g. of a thermoplastic material. A preferred printing direction and filament direction is schematically illustrated in Fig. 36A. While the first part 125 is, in Fig. 36A, a straight tube with a cylindrical wall, the second part 225 is a straight tube with a cylindrical wall which is provided with a peripheral groove 225b.

In order to connect the parts 125 and 225 and form an assembly or component 1025, the second tube 225 is inserted into the hollow interior of the first tube 125 in such a manner that the groove 225b is inside the first part 125 and spaced from the axial rim of the latter, see Fig. 36B. Then, heat H is locally applied to a pre-defined region 125a of the first part 125, which is a circumferentially extending, ring-like wall region. While in Figs. 36A-D, masking material is not shown, it may be appreciated that masking material may be used to prevent further regions of the first part 125 from softening due to heating. The pre-defined region 125a may be heated to a temperature below the glass-transition temperature of the thermoplastic.

Thereafter, in a next step, see Figs. 36C-D, the heated pre-defined region 125a is deformed, using a roller-shaped tool T25, and thereby pressed into the peripheral groove 225b. After cooling, the engagement of the deformed pre-defined region 125b with the groove 225b prevents the tubes 125, 225 from being separated and positively connects them. For applications in which higher loads are expected, two or more grooves 225b spaced along a longitudinal axis of the second part 225 may be provided and two or more pre-defined regions 125a of the first part 125 can then be deformed, to obtain a positive connection at several axial locations.

The method described herein above with reference to Figs. 36A-D may, in variants of the twenty-fifth embodiment, not only be used to connect two thermoplastic 3D-printed tubes, but instead may be used to connect a metallic tube with a 3D printed tube or a CFRP (composite fibre reinforced plastic) tube with a 3D printed tube. In such variants, the first part 125, which is to be heated and deformed, preferably is produced from thermoplastic material using 3D printing.

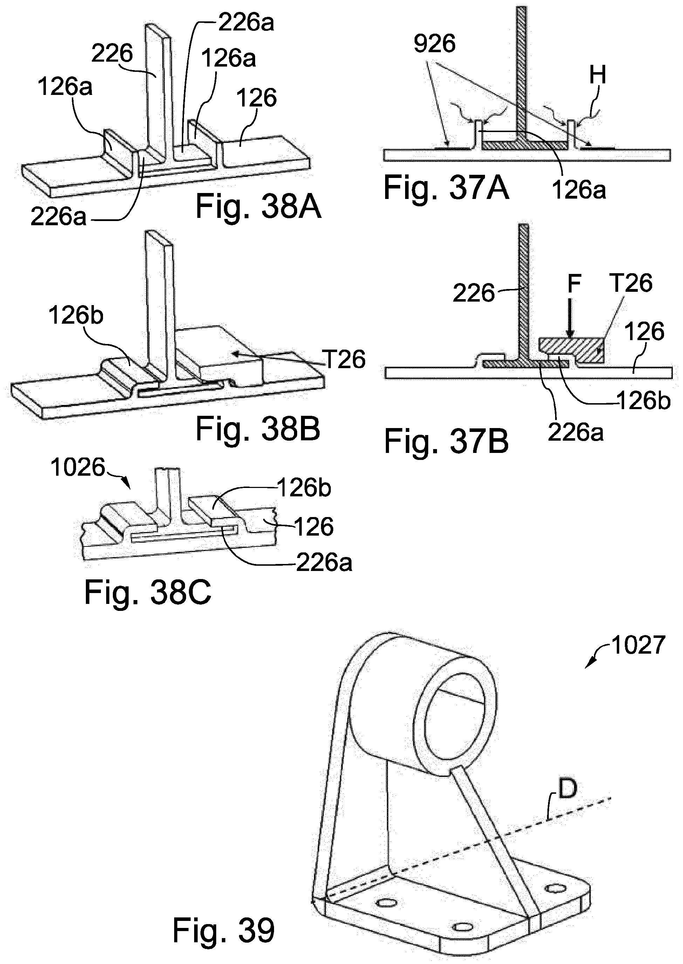

In Figs. 37A-B, 38A-C, a method of producing an assembly or component 1026 in accordance with a twenty-sixth embodiment is illustrated, which may be used to connect a T-, L-, I- or Omega-shaped part to another part. In exemplary manner, Figs. 37A-B, 38A-C show a first part 126 that is being connected to a T-shaped second part 226.

At least the first part 126 is produced by 3D-printing it in layers, in particular from a thermoplastic, e.g. by depositing filaments. The second part 226 may be 3D-printed, too, e.g. as a profile-shaped part, or may be a profile produced in some other way.

During 3D-printing, the first part 126 is provided with pre-defined regions 126a configured as small flanges or ribs, which are integrally connected to and extend essentially transversely from a plate-shaped main body of the first part 126.

After arranging the first and second parts 126, 226 in a pre-defined configuration, with a flange 226a of the T-shaped profile 226 located between the pre-defined regions 126a of the first part 126, see Figs. 37A and 38A, the pre-defined regions 126a are heated to an increased temperature below the glass-transition temperature of the thermoplastic from which the first part 126 is formed. Masking material 926, e.g. aluminum tape, is used to prevent further regions of the first part 126 from softening or melting.

A tool T26, configured as a profile-shaped die having a step, is used to deform and bend the pre-defined regions 126a, by applying a force F, towards the flange 226a of the second part 226, and partially over that flange 226a. This is performed for both the 3D-printed, pre-defined regions 126a, either simultaneously on both sides of the flange 226a of the second part 226 or sequentially.

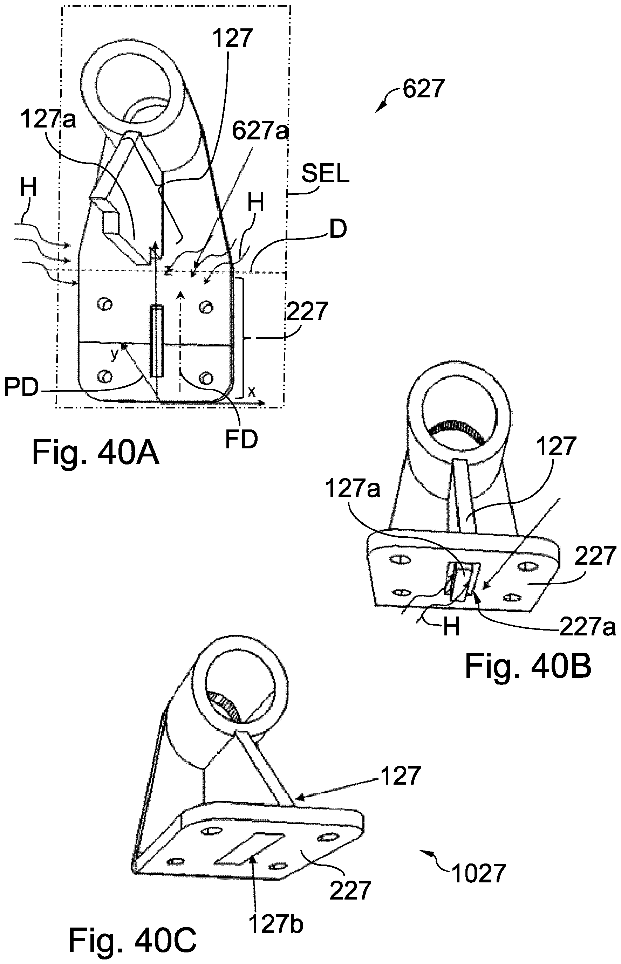

A method a producing a component 1027, which may be used as a bearing bracket, for example, in accordance with a twenty-seventh embodiment is illustrated in Figs. 39 and 40A-C.

In a first step, illustrated schematically in Fig. 40A, an intermediate workpiece 627 is provided by 3D-printing layer by layer. The intermediate workpiece 627 may be 3D-printed by depositing a filament, e.g. by fused deposition modeling (FDM) or fused filament fabrication (FFF), or the intermediate workpiece 627 may be 3D-printed by selective laser sintering (SLS) or stereolithography (SLA). While SLS and SLA may help to obtain more isotropic material properties in the printed workpiece 627, a workpiece 627 printed using deposition of filaments exhibits material anisotropy. Yet, FDM and FFF are printing processes that enable high productivity and reduced cost. In this twenty-seventh embodiment, preferably deposition of filaments (e.g. FFF or FDM) is used to 3D print the intermediate workpiece 627, using thermoplastic material, e.g. PEI. Fig. 40A indicates an exemplary printing direction PD, exemplary filament direction FD and exemplary surface of extension SEL of the printed layers.

The printed intermediate workpiece 627 comprises a first part 127 and a second part 227, which are integrally formed with each other and are connected to each other, as described below, in order to form the finished component 1027.

After printing, the intermediate workpiece 627 undergoes a post-processing step, illustrated in Fig. 40A-B, in which the intermediate workpiece 627 is locally heated in a pre-defined first region 627a along a bending axis D and then bent along the bending axis D. Thereby, the second part 227 is rotated through an angle with respect to the first part 127.

The second part 227 is plate-shaped and comprises a passage 227a configured as a slot having a chamfer, analogous to the first embodiment. The first part 127 is plate-shaped as well, and is provided with a flange-shaped, protruding section having a pre-defined second region 127a at a free end. During the post-processing step, which includes the bending along the bending axis D, the protruding section with the pre-defined second region 127a is introduced into the slot 227a, and then protrudes from the chamfered side of the slot 227a, see Fig. 40B.

In the final component 1027, the first part 127 is configured as a bridge element or stabilizing flange, while the second part 227 can be used as an attachment flange for the component 1027.

In order to firmly and positively connect the first and second parts 127, 227, heat H is applied to the pre-defined second region 127a, and the region 127a is deformed as a manner analogous to the first embodiment and is accordingly conformed to the chamfer of the slot 227a. After cooling, by engagement of the first and second parts 127, 227 via the chamfer of the slot 227a and the deformed pre-defined second region 127b, see Fig. 40C, the parts 127, 227 are positively connected and the finished component 1027 is obtained.

In a variant, connecting the parts 127 and 227 in line with other embodiments described herein above is conceivable. Also, it may be conceivable, in some variants, to heat the pre-defined section to be deformed to establish the positive connection not after, but before or during the post-processing step in which the first and second parts are arranged in their desired, pre-defined and final configuration.

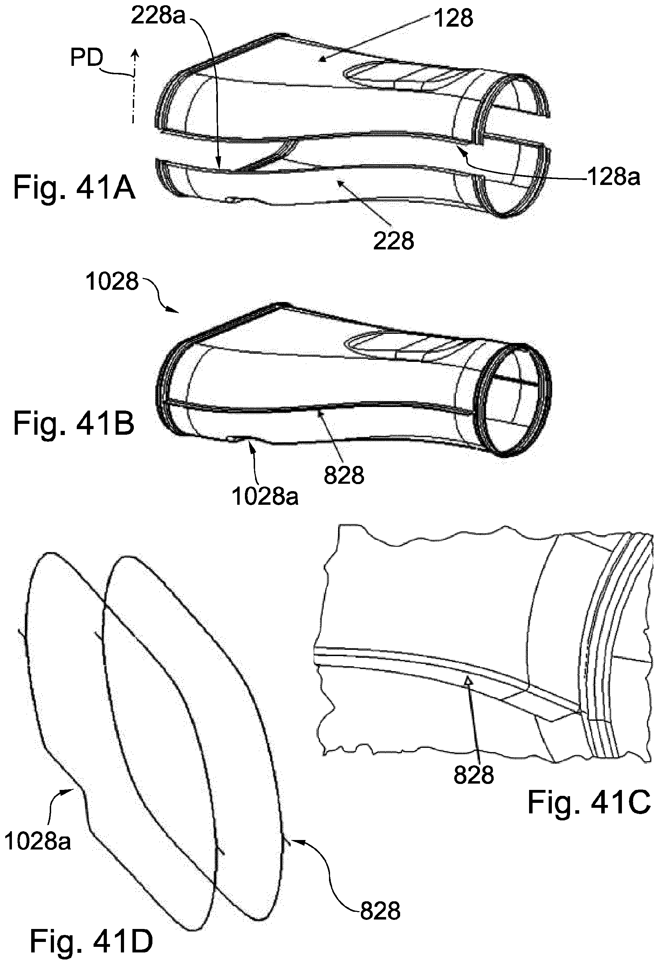

A twenty-eighth embodiment is illustrated in Figs. 41A-D. A first part 128 and a second part 228, which are configured as two shell-type elements forming two halves of a duct 1028, are provided by 3D-printing, e.g. by depositing filaments, preferably from a thermoplastic. A preferred printing direction is displayed in Fig. 41A for the first part 128. The parts 128, 228 each have pre-defined regions 128a, 228a which are brought into contact in a contact area 828 and joined in line with the twentieth embodiment, described in detail above with reference to Figs. 26A-F. This may help to avoid additional stiffening walls, too.

The parts 128, 228 may, via the 3D-printing, advantageously be provided with the shape required, for example if the duct 1028 is to be installed in an aircraft or spacecraft at a particular location. For example, the component 1028 can include a depression 1028a, as shown in exemplary manner by the contour lines in Fig. 41D, for attachment or other purposes.

It may be appreciated that in variants of the twenty-eighth embodiment, the first and second parts 128, 228 may be connected in accordance with one or more of the further embodiments described above, for instance in accordance with any one of the twelfth, thirteenth, fourteenth, fifteenth, sixteenth or seventeenth embodiment described herein above.

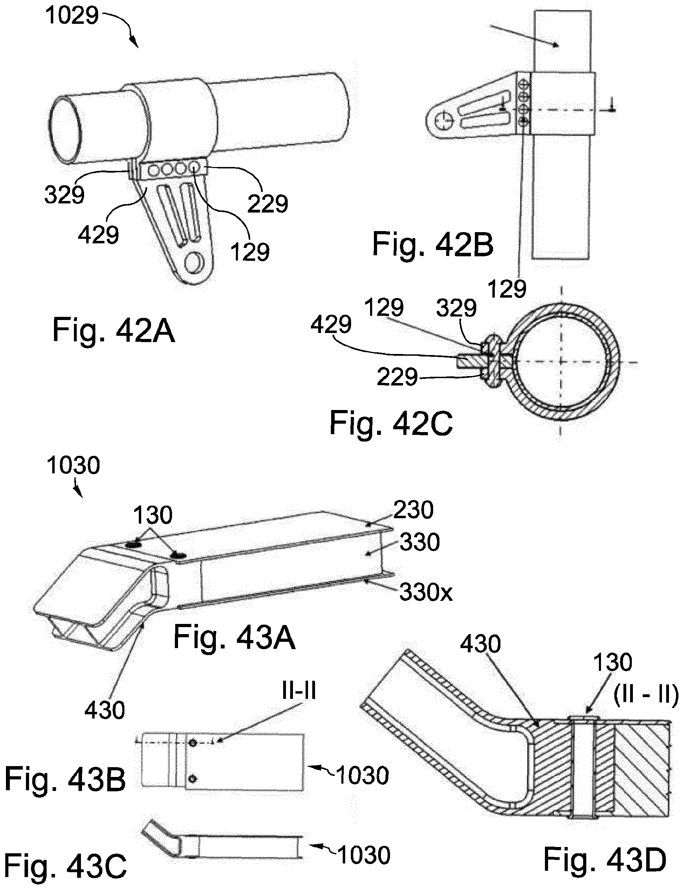

A twenty-ninth embodiment is illustrated in Figs. 42A-C. A clamp-type bracket is attached to a pipe-shaped element. The bracket comprises a first parts 129, a second part 229 being one leg of a clamp, a third part 329 being another leg of the clamp, and a fourth, plate-shaped part 429, e.g. an attachment plate. Figs. 42A-C illustrate a variant in which the parts 229, 329, 429 are positively connected using solid rivet-type elements assembled from two pieces each, as described above for any one of the sixteenth or seventeenth embodiments. Alternatively, for example, the connection of the parts 229, 329, 429 may be established in accordance with the nineteenth embodiment in Figs. 24, 25 in order to obtain particularly high strength.

Figs. 43A-D illustrate an assembly 1030 in accordance with a thirtieth embodiment, in which preferably connections in line with the sixteenth or seventeenth or nineteenth embodiments are used. The assembly 1030 comprises a sandwich panel made with a central honeycomb part 330 as well as a CFRP (composite fibre reinforced plastic) laminate layer 230 on one side and another CFRP laminate layer 330x on the other side of the honeycomb part 330. At one end of the sandwich panel part, a 3D-printed insert, configured e.g. as a bracket, is connected to the sandwich panel, using fastener parts 130. In order to establish the connection of the insert 430 and the sandwich panel, connections preferably according to any one of the thirteenth, fourteenth, fifteenth, sixteenth, seventeenth or nineteenth embodiment may be used, as described herein above in detail. In particular, the part 130 used as a fastening part is not necessarily cylindrical and is not necessarily round or circular in cross-section, but may have an elongate cross-sectional shape. The part 130 illustrated in Fig. 43D is shown to be hollow, in the manner of a cylindrical collar, but part 130 may be a collar having an elongated cross-section or may be solid.

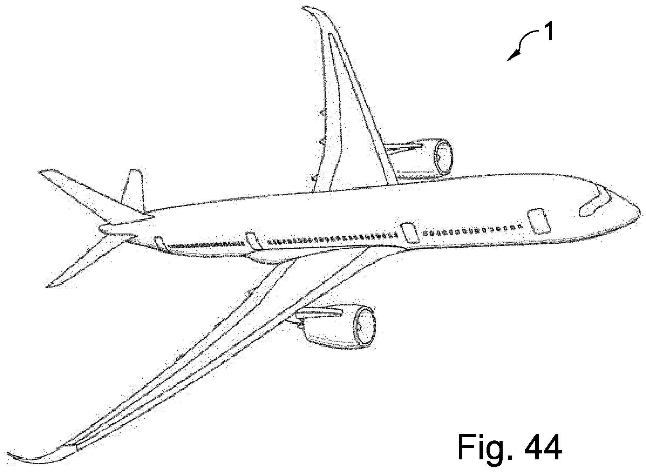

The invention, in particular any of the first to thirtieth embodiments and their variants described above, may be used in aviation, for example for assemblies or components that are intended to form part of or to be installed in an aircraft or spacecraft 1, illustrated in Fig. 44 in exemplary manner. The aircraft or spacecraft 1 may be intended to be used in general aviation, commercial air and space travel, aerospace applications for military use or defence, or cargo transport, for example. Moreover, the invention and the embodiments and variants described above may be useful for drones or MAVs, satellites, observation platforms, devices for space research, interplanetary platforms, the exploration of other planets and possible colonisation thereof, urban mobility concepts, the automotive industry, or consumer goods, for instance. Using deposition of thermoplastic filaments, parts and assemblies and components may be produced in challenging environments, e.g. in space or on other planets. The invention and the embodiments described above can be useful to produce new products and devices, but may also be useful for repair, retrofit or upgrade. The embodiments of the invention described above advantageous avoid the use of additional adhesives, help to reduce the number of assembled parts, and may help to improve the sustainability of the production of assemblies and components. Also, using the invention, the built-to-fly percentage may be increased by reduced use of material.

Although the invention has been completely described above with reference to preferred embodiments, the invention is not limited to these embodiments but may be modified in many ways.

### LIST OF REFERENCE SIGNS

- 1: aircraft or spacecraft
- 101-130: first part
- 116-1, 116-2: piece
- 101a-106a: pre-defined region
- 108a-121a: pre-defined region
- 123a-128a: pre-defined region
- 109c, 111c, 112c: pre-defined region
- 115c, 116c, 117c: pre-defined region
- 119c: pre-defined region
- 120a': free end region
- 101b-121b: deformed pre-defined region
- 124b-127b: deformed pre-defined region
- 109d, 111d, 115d: deformed pre-defined region
- 119d: deformed pre-defined region
- 114c, 114d: region
- 122a: passage
- 119p, 121p, 123p: passage
- 124p: passage
- 118c: ridge-like geometry
- 119y: bevel
- 109e, 113e: pre-defined region
- 102z, 103z,106z: stopper
- 108x: bulge
- 108y: contour
- 120t, 122t: surface
- 122s: surface
- 121g: groove
- 121o: collar
- 123o: collar-shaped section
- 122r: recess
- 124f: flange
- 201-230: second part
- 201a-209a: passage
- 211a-216a: passage
- 221a-224a, 227a: passage
- 219p: passage
- 218a-220a, 228a: pre-defined region
- 219c: pre-defined region
- 219d: deformed pre-defined region
- 220b: deformed pre-defined region
- 220a': free end region
- 226a: flange
- 201b, 207b, 208b: chamfer
- 211b, 212b, 219b: chamfer
- 204b: rounded shape
- 205b, 206b: recessed shape
- 215b: recessed region
- 201s, 209s: surface
- 201t: surface
- 210s, 210t, 220t: surface
- 222s, 222t: surface
- 209c, 210c: recess
- 219y: bevel
- 221g: groove
- 222q: protrusion
- 224o: orifice
- 225b: peripheral groove
- 309, 313, 314: third part
- 315-319, 321, 322: third part
- 324, 329: third part
- 309a, 313a, 314a: passage
- 315a, 316a, 319a: passage
- 324a: passage
- 315b: recessed region
- 319b: chamfer
- 309c: recess
- 309t: surface
- 318a: ridge
- 319i: inner cylindrical surface
- 322b: deformed pre-defined region
- 322c: flange
- 330: honeycomb part
- 330x: laminate layer
- 419, 424, 429, 430: fourth part
- 419a, 424a: passage
- 419b: chamfer
- 419i: inner cylindrical surface
- 519: fifth part
- 519a: pre-defined region
- 524: cavity
- 619: sixth part
- 624: elastomer
- 627: intermediate workpiece
- 627a: pre-defined region
- 722, 723: primary positive connection
- 822, 823: secondary positive connection
- 820, 828: contact area
- 901-906: masking material
- 909, 911-916, 919: masking material
- 920, 921, 923, 926: masking material
- 1001-1030: assembly or component
- 1028a: depression
- D: bending axis
- F: force
- F17: tension force
- F24: load
- FD: filament direction
- H: heat
- I-19: inner surface
- L2, L3, L4: location
- L1', L2': location
- PD: printing direction
- SEL: surface of extension of the printed layers
- T1, T9a, T9b, T12: tool
- T13, T14, T15, T16: tool
- T18, T19a, T19b, T20: tool
- T21,T25, T26: tool
- T19a-1, T19a-2: section (tool T19a)
- TF: tension force
- α: angle

## Claims

1. Method of producing an assembly or component (1001-1009, 1011-1017, 1019, 1021-1027, 1029, 1030) including a first part (101-109, 111-117, 119, 219, 121, 322, 123-127, 129, 130) connected to a second part (201-209, 211-217, 319, 419, 221, 122, 223-227, 229, 230), the method comprising:
- providing the first part (101-109, 111-117, 119, 219, 121, 322, 123-127, 129, 130) and the second part (201-209, 211-217, 319, 419, 221, 122, 223-227, 229, 230), including 3D-printing the first part (101-109, 111-117, 119, 219, 121, 322, 123-127, 129, 130) or at least a portion thereof in layers;
- arranging the first and second parts (101-109, 111-117, 119, 219, 121, 322, 123-127, 129, 130, 201-209, 211-217, 319, 419, 221, 122, 223-227, 229, 230) relative to each other in a pre-defined configuration, and then introducing heat (H) into a pre-defined region (101a-106a, 108a, 109a, 111a, 111c, 112a-114a, 115a, 115c, 116a, 117a, 119a, 119c, 219a, 219c, 121a, 123a-127a) of the first part (101-109, 111-117, 119, 219, 121, 322, 123-127, 129, 130), the pre-defined region (101a-106a, 108a, 109a, 111a, 111c, 112a-114a, 115a, 115c, 116a, 117a, 119a, 119c, 219a, 219c, 121a, 123a-127a) being a 3D-printed region of the first part (101);
- deforming the heated pre-defined region (101a-106a, 108a, 109a, 111a, 111c, 112a-114a, 115a, 115c, 116a, 117a, 119a, 119c, 219a, 219c, 121a, 123a-127a) of the first part (101-109, 111-117, 119,219, 121, 322, 123-127, 129, 130) and then allowing the deformed pre-defined region (101b-109b, 111b, 111d, 112b-114b, 115b, 115d, 116b, 117b, 119b, 119d, 219b, 219d, 121b, 322b, 124b-127b) to cool, in order to obtain a positive connection of the first and second parts (101-109, 111-117, 119, 219, 121, 322, 123-127, 129, 130, 201-209, 211-217, 319, 419, 221, 122, 223-227, 229, 230) by engagement of the first part (101-109, 111-117, 119, 219, 121, 322, 123-127, 129, 130) with the second part (201-209, 211-217, 319, 419, 221, 122, 223-227, 229, 230) after having deformed the pre-defined region (101a-106a, 108a, 109a, 111a, 111c, 112a-114a, 115a, 115c, 116a, 117a, 119a, 119c, 219a, 219c, 121a, 123a-127a).

2. Method of producing an assembly or component (1009, 1010, 1018) including a first part (109, 110, 118) connected to a second part ( 209, 309, 210, 218), the method comprising:
- providing the first part (109, 110, 118) and the second part (209, 309, 210, 218), including 3D-printing the first part (109, 110, 118) or at least a portion thereof in layers;
- introducing heat (H) into a pre-defined region (109c, 110a, 118a) of the first part (109, 110, 118), the pre-defined region (109c, 110a, 118a) being a 3D-printed region of the first part (109, 110, 118), and then arranging the first and second parts (109, 110, 118, 209, 309, 210, 118) relative to each other in a pre-defined configuration;
- deforming the heated pre-defined region (109c, 110a, 118a) of the first part (109, 110, 118) and then allowing the deformed pre-defined region (109d, 110b, 118b) to cool, in order to obtain a positive connection of the first and second parts (109, 110, 118, 209, 309, 210, 218) by engagement of the first part (109, 110, 118) with the second part (209, 309, 210, 218) after having deformed the pre-defined region (109a, 110a, 118a).

3. Method of producing an assembly or component (1027) including a first part (127) and a second part (227), the method comprising:
- providing an intermediate workpiece (627) including the first part (127) that is integrally formed with the second part (227) by 3D-printing the intermediate workpiece (627) or at least a portion thereof in layers;
- introducing heat (H) into a pre-defined first region (627a) of the intermediate workpiece (627);
- deforming the intermediate workpiece (627) including deforming the pre-defined first region (627a), in order to arrange the first and second parts (127, 227) relative to each other in a pre-defined configuration;
- introducing heat (H) into a pre-defined second region (127a) being a 3D-printed region of the first or second part (127, 227);
- deforming the heated pre-defined second region (127a) and then allowing the deformed pre-defined second region (127b) to cool, in order to obtain a positive connection of the first and second parts (127, 227) by engagement of the first and second parts (127, 227) after having deformed the pre-defined second region (127a).

4. Method of producing an assembly or component including a first part and a second part, the method comprising:
- providing an intermediate workpiece including the first part that is integrally formed with the second part by 3D-printing the intermediate workpiece or at least a portion thereof in layers;
- introducing heat into a pre-defined first region of the intermediate workpiece and introducing heat into a pre-defined second region being a 3D-printed region of the first or second part;
- deforming the intermediate workpiece including deforming the pre-defined first region, in order to arrange the first and second parts relative to each other in a pre-defined configuration, and deforming the heated pre-defined second region and then allowing the deformed pre-defined second region to cool, in order to obtain a positive connection of the first and second parts by engagement of the first and second parts after having deformed the pre-defined second region.

5. Method according to any one of the preceding claims,
**characterized in that** the step of arranging the first and second parts in the pre-defined configuration includes introducing a section of the first part (101-118, 119, 219, 121, 322, 123, 124, 127, 129, 130) into or through a passage (201a-209a, 211a-216a, 218a, 319a, 419a, 221a, 122a, 223a, 224a, 227a) or into a recess (209c, 309c, 210c) in the second part (201-218, 319, 419, 221, 122, 223, 224, 227, 229, 230).

6. Method of producing an assembly or component (1009, 1013-1017, 1019, 1022, 1029, 1030) including a first part (109, 113-117, 119, 219, 322, 129, 130) connecting a second part (209, 213-217, 319, 122, 229, 230) and a third part (309, 313-317, 419, 222, 329, 330), the method comprising:
- providing the first part (109, 113-117, 119, 219, 322, 129, 130), the second part (209, 213-217, 319, 122, 229, 230) and the third part (309, 313-317, 419, 222, 329, 330), including 3D-printing the first part (109, 113-117, 119, 219, 322, 129, 130) or at least a portion thereof in layers;
- arranging the first, second and third parts (109, 113-117, 119, 219, 322, 129, 130, 209, 213-217, 309, 313-317, 319, 122, 229, 230, 419, 222, 329, 330) relative to each other in a pre-defined configuration, and then introducing heat (H) into at least one pre-defined region (109a, 113a-117a, 115c, 119a, 119c, 219a, 219c) of the first part (109, 113-117, 119, 219, 322, 129, 130), the pre-defined region (109a, 113a-117a, 115c, 119a, 119c, 219a, 219c) being a 3D-printed region of the first part (109, 113-117, 119, 219, 322, 129, 130);
- deforming the heated pre-defined region (109a, 113a-117a, 115c, 119a, 119c, 219a, 219c) of the first part (109, 113-117, 119, 219, 322, 129, 130) and then allowing the deformed pre-defined region (109b, 113b-117b, 115d, 119b, 119d, 219b, 219d, 322b) to cool, in order to obtain a positive connection of the first part (109, 113-117, 119, 219, 322, 129, 130) with each of the second and third parts (209, 213-217, 309, 313-317, 319, 122, 229, 230, 419, 222, 329, 330) by engagement of the deformed pre-defined region (109b, 113b-117b, 115d, 119b, 119d, 219b, 219d, 322b) with one of the second and third parts (209, 213-217, 309, 313-317, 319, 122, 229, 230, 419, 222, 329, 330) and by additional engagement of a further pre-defined region (109e, 113e, 114d, 115d, 116c, 117c, 119d, 119b, 219d, 219b, 322c) of the first part (109, 113-117, 119, 219, 322, 129, 130) with the other one of the second and third parts (209, 213-217, 309, 313-317, 319, 122, 229, 230, 419, 222, 329, 330).

7. Method of producing an assembly or component (1019, 1024) including at least a first part (119, 124) and a second part (219, 224) which, in cooperation, connect a third part (319, 324) and a fourth part (419, 424), the method comprising:
- providing the first, second, third and fourth parts (119, 124, 219, 224, 319, 324, 419, 424), including 3D-printing at least, in layers, the first part (119, 124) or at least a portion thereof and the second part (219, 224) or at least a portion thereof;
- arranging the first, second, third and fourth parts (119, 124, 219, 224, 319, 324, 419, 424) relative to each other in a pre-defined configuration, and then introducing heat (H) into a pre-defined region (124a) of the first part (124) or into pre-defined regions (119a, 119c, 219a, 219c) of each of the first and second parts (119, 219), the pre-defined region or regions (124a, 119a, 119c, 219a, 219c) being a 3D-printed region or regions;
- deforming the heated pre-defined region (124a) of the first part (124) or the heated pre-defined regions (119a, 119c, 219a, 219c) of the first and second parts (119, 219) and then allowing the deformed pre-defined region or regions (119b, 119d, 219b, 219d) to cool, in order to positively connect the third and fourth parts (319, 324, 419, 424) by engagement of at least one of the first and second parts (119, 124, 219, 224) with the third part (319, 324) and by engagement of at least the other one of the first and second parts (119, 124, 219, 224) with the fourth part (419, 424).

8. Method according to claim 7,
**characterized in that** each of the third and fourth parts (319, 324, 419, 424) comprises a passage (319a, 324a, 424a, 419a) and **in that** the step of arranging the first, second, third and fourth parts (119, 124, 219, 224, 319, 324, 419, 424) in the pre-defined configuration includes arranging the third and fourth parts (319, 324, 419, 424) adjacent each other and in such a manner that sections of each of the third and fourth parts (319, 324, 419, 424) that include the passage (319a, 324a, 424a, 419a) are arranged between the first and second parts (119, 124, 219, 224).

9. Method according to any one of the preceding claims,
**characterized in that** the first part (113-115, 118, 121, 322, 123, 124) is a hollow body or hollow section or **in that** the first part (101-112, 116, 117) is a solid body or solid section or **in that** the first part (116, 117, 129, 130) is provided by assembling at least two individual pieces or **in that** the first and second parts (119, 120, 122, 125, 128, 219, 220, 222, 225, 228) are plate-type parts or shell-type parts or tube-type parts.

10. Method of producing an assembly or component (1020, 1028) including a first part (120, 128) connected to a second part (220, 228), the method comprising:
- providing the first part (120, 128) and the second part (220, 228), including 3D-printing at least, in layers, the first part (120, 128) or at least a portion thereof and the second part (220, 228) or at least a portion thereof;
- arranging the first and second parts (120, 128, 220, 228) relative to each other in a pre-defined configuration, and then introducing heat (H) into pre-defined regions (120a, 220a) of each of the first and second parts (120, 128, 220, 228), the pre-defined regions (120a, 220a) being 3D-printed regions of the first and second parts (120, 128, 220, 228);
- deforming the heated pre-defined regions (120a, 220a) of the first and second parts (120, 128, 220, 228) and pressing the deformed pre-defined regions (120a, 220a) against each other in order to unite material of the pre-defined regions (120a, 220a) in a contact area (820, 828) thereof, and then allowing the pre-defined regions (120a, 220a) to cool.

11. Method according to any one of the preceding claims, **characterized in that** the step of deforming the pre-defined region (101a-106a, 108a, 110a, 112a-114a, 116a-118a, 121a, 322a, 123a-128a) or regions (109a, 109c, 111a, 111c, 115a, 115c, 119a, 119c, 219a, 219c, 120a, 220a) comprises modifying a shape of a main surface of extension of the layers.

12. Method according to any one of the preceding claims, **characterized in that** the method includes masking at least one of the parts (119-120, 122, 125-129, 201-209, 211-217, 219-221, 223, 224, 228, 230, 314, 315) before introducing heat (H).

13. Method of producing an assembly or component (1022) including a first part (122) connected to a second part (222), the method comprising:
- providing the first part (122) and the second part (222), including 3D-printing, in layers, the first part (122) or at least a portion thereof and the second part (222) or at least a portion thereof, the first part (122) and the second part (222) being adapted to be connected in such a manner that a first face (122t) of the first part (122) faces a second face (222t) of the second part (222), the first and second parts (122, 222) being shaped to enable a primary positive connection (722) connecting the first and second parts (122, 222) and further being shaped, in corresponding areas of the first and second faces (122t, 222t), to enable at least one secondary positive connection (722) of the first and second parts (122, 222) in the vicinity of the primary positive connection (822);
- arranging the first and second parts (122, 222) relative to each other in such a manner that the first face (122t) faces the second face (222t), and thereby establishing the secondary positive connection (722);
- securing the first and second parts (122, 222) to each other at the primary positive connection (822).

14. Method according to claim 13,
**characterized in that** the first and/or second part (122, 222) is formed with at least one through-opening (122a, 222a) for enabling the primary positive connection (822), **in that** the first part (122) is provided in the first face (122t) with at least one recess (122r) having a rounded cross-sectional shape in the vicinity of the primary positive connection (822), and **in that** the second part (222) is provided on the second face (222t) with at least one protrusion (222q) having a rounded cross-sectional shape in the vicinity of the primary positive connection (822) and configured to be received in the recess (122r) in the first face (122t); and **in that** the method includes arranging the first and second parts (122, 222) in such a way that the protrusion (222q) engages with the recess (122r).

15. Method according to any one of the preceding claims,
**characterized in that** the 3D-printing includes a step or steps of additive manufacturing using a process of fused deposition modeling or fused filament fabrication or selective laser sintering or stereolithography.

16. Method according to any one of the preceding claims,
**characterized in that** the 3D-printing comprises processing a thermoplastic synthetic material and/or the 3D-printing includes a step or steps of depositing a thermoplastic synthetic material layer by layer, in particular by depositing a thermoplastic filament.

17. Assembly or component (1001-1030), in particular for an aircraft or spacecraft (1), produced or producible using the method according to at least one of the preceding claims.
